(19) Europäisches Patentamt / European Patent Office / Office européen des brevets

(11) **EP 4 722 438 A1**

(12) **EUROPEAN PATENT APPLICATION**
published in accordance with Art. 153(4) EPC

(43) Date of publication:
**08.04.2026   Bulletin 2026/15**

(21) Application number: **24868776.6**

(22) Date of filing: **29.08.2024**

(51) International Patent Classification (IPC):
**D06F 37/30** (2020.01)      **H02P 27/06** (2006.01)
**H02P 3/14** (2006.01)      **H02M 1/00** (2006.01)
**H02M 3/335** (2006.01)      **D06F 34/05** (2020.01)
**D06F 34/28** (2020.01)      **D06F 103/46** (2020.01)
**D06F 105/46** (2020.01)

(52) Cooperative Patent Classification (CPC):
**D06F 34/05; D06F 34/28; D06F 37/30; H02M 1/00;**
**H02M 3/335; H02P 3/14; H02P 27/06;**
D06F 2103/46; D06F 2105/46

(86) International application number:
**PCT/KR2024/096125**

(87) International publication number:
**WO 2025/063801 (27.03.2025 Gazette 2025/13)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.09.2023   KR 20230124086**

(71) Applicant: **Samsung Electronics Co., Ltd.**
**Suwon-si, Gyeonggi-do 16677 (KR)**

(72) Inventors:
• **AHN, Hyomin**
  **Suwon-si, Gyeonggi-do 16677 (KR)**
• **CHO, Jehyung**
  **Suwon-si, Gyeonggi-do 16677 (KR)**

• **KANG, Jeongil**
  **Suwon-si, Gyeonggi-do 16677 (KR)**
• **KIM, Seunghoon**
  **Suwon-si, Gyeonggi-do 16677 (KR)**
• **PARK, Junhyun**
  **Suwon-si, Gyeonggi-do 16677 (KR)**
• **LEE, Sungmo**
  **Suwon-si, Gyeonggi-do 16677 (KR)**
• **LEE, Seunghun**
  **Suwon-si, Gyeonggi-do 16677 (KR)**
• **LEE, Junghyun**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **WASHING MACHINE AND CONTROL METHOD THEREOF**

(57)    **In** a washing machine according to an embodiment of the present disclosure, when a voltage of a DC link capacitor is equal to or greater than a predetermined voltage, an energy storage device is charged with the voltage of the DC link capacitor by using a step-down power converter capable of stepping down a DC voltage, and when the voltage of the DC link capacitor drops, the DC link capacitor is charged by discharging the energy storage device. In addition, the washing machine can use regenerative braking energy by stepping down or stepping up the voltage from the energy storage device to a load by using a power conversion device.

EP 4 722 438 A1

# FIG. 8

**Description**

Technical Field

An embodiment of the disclosure relates to a method for controlling a power conversion device (also referred to herein as a converter) and a washing machine employing the method.

Background Art

Some approaches for stopping a motor in a home appliance such as, for example, a washing machine, use a method of consuming regenerative braking energy by using the winding resistance of the motor. Some other approaches for stopping a motor in a washing machine use a method of recovering a back electromotive force generated by the motor to a direct current (DC) link capacitor of an inverter. In this case, the voltage of the DC link capacitor may rise, and measures for stabilizing the voltage of the DC link capacitor are desired.

Disclosure **of Invention**

Solution **to Problem**

A washing machine according to an embodiment of the disclosure, includes a case, a laundry inlet through which laundry is loaded, the laundry inlet being disposed in an upper portion or lateral surface of the case, a door attached to the laundry inlet, a fixed tank storing water for washing the laundry, a rotating tank including a container within the fixed tank and capable of rotating, and a power conversion device for driving a motor 1800 that rotates the rotating tank. The power conversion device includes a first rectifier configured to rectify an alternating current (AC) voltage of an input power supply, a direct current (DC) link capacitor 60 configured to smooth the DC voltage rectified by the first rectifier, an inverter configured to convert the DC voltage smoothed by the DC link capacitor into an AC voltage for driving the motor, the motor driven by the AC voltage converted by the inverter to rotate the rotating tank; a first power converter connected to both ends of the DC link capacitor or the input power supply to generate a DC voltage that is supplied to a load, the load capable of being driven by the DC voltage generated by the first power converter, a second power converter connected to the both ends of the DC link capacitor, and configured to convert the DC voltage of the DC link capacitor, based on a voltage on the both ends of the DC link capacitor becoming equal to or greater than a first predetermined voltage caused by deceleration of the motor 1800, to charge an energy storage device 1900, and a processor configured to control respective operations of the first power converter 1140 and the second power converter 1150.

**In** the washing machine according to an embodiment of the disclosure, when the first power converter is connected to the input power supply, the first power converter may include a second rectifier for converting the AC voltage of the input power supply to a DC voltage.

The washing machine according to an embodiment of the disclosure may further include a third power converter configured to convert the DC voltage of the energy storage device into the DC voltage that is supplied to the load, and the processor may control the third power converter.

The washing machine according to an embodiment of the disclosure may further include a first diode between the first power converter and the load, and a second diode between the third power converter and the load. When the direct current voltage generated by the third power converter is greater than the DC voltage generated by the first power converter by a certain voltage, the DC voltage generated by the third power converter may be selected as a voltage supplied to the load by the second diode.

In the washing machine according to an embodiment of the disclosure, an input of the second power converter may be electrically insulated from an output of the second power converter.

In the washing machine according to an embodiment of the disclosure, an input of the third power converter may be electrically insulated from an output of the third power converter.

In the washing machine according to an embodiment of the disclosure, each of the second power converter and the third power converter may be a DC/DC converter configured to change a DC voltage into a DC voltage of a different level.

In the washing machine according to an embodiment of the disclosure, the second power converter may be configured to convert the DC voltage of the DC link capacitor, based on a voltage on the both ends of the DC link capacitor becoming equal to or greater than a first predetermined voltage due to regenerative braking caused by deceleration of the motor 1800, to charge an energy storage device 1900 and the second power converter may be a bidirectional buck-boost converter configured to change a DC voltage into a DC voltage of a different level in both directions.

In the washing machine according to an embodiment of the disclosure, the processor may control the bidirectional buck-boost converter to transmit power charged in the energy storage device to the DC link capacitor, based on a determination that regenerative braking due to deceleration of the motor does not occur or that power for driving the motor is required.

In the washing machine according to an embodiment of the disclosure, the processor may control the bidirectional buck-boost converter to transmit power charged in the energy storage device to the DC link capacitor, based on power required for driving the motor again.

In the washing machine according to an embodiment of the disclosure, the processor may control the bidirectional buck-boost converter to transmit power charged in the energy storage device to the DC link capacitor, based on the voltage of the DC link capacitor being less than or equal to a second certain voltage.

In the washing machine according to an embodiment of the disclosure, the processor may control the bidirectional buck-boost converter to stop energy charging from the energy storage device to the DC link capacitor, based on the voltage of the DC link capacitor becoming a third certain voltage.

The washing machine according to an embodiment of the disclosure may further include a communication interface, and a user interface including an input interface and an output interface, and the load may include at least one of the processor, the communication interface, or the user interface.

In the washing machine according to an embodiment of the disclosure, the communication interface may include a Wi-Fi communication interface, and the processor may control the power generated by the regenerative braking to be used to drive the Wi-Fi communication interface to achieve Wi-Fi communication.

In the washing machine according to an embodiment of the disclosure, the processor may control the DC voltage of the DC link capacitor to be converted and charged in the energy storage device, and then control the voltage on both ends of the DC link capacitor to maintain a certain voltage command.

In the washing machine according to an embodiment of the disclosure, while the processor is controlling the voltage on both ends of the DC link capacitor to maintain the certain voltage command, a current value charged in the energy storage device is constant.

In the washing machine according to an embodiment of the disclosure, the certain voltage command may be less than or equal to the certain voltage.

In a method of controlling a washing machine, according to an embodiment of the disclosure, the washing machine includes a case, a laundry inlet through which laundry is loaded, the laundry inlet being disposed in an upper portion or lateral surface of the case, a door attached to the laundry inlet, a fixed tank storing water for washing the laundry, a rotating tank composed of a container within the fixed tank and capable of rotating, and a power conversion device for driving a motor that rotates the rotating tank. The method may include rectifying an alternating current (AC) voltage of an input power supply to a direct current (DC) voltage, smoothing the DC voltage by using a DC link capacitor, converting the smoothed DC voltage into an AC voltage for driving a motor, rotating the rotating tank by driving the motor by using the converted AC voltage, and converting the DC voltage of the DC link capacitor and charging an energy storage device, when a voltage of the DC link capacitor becomes equal to or greater than a first certain voltage caused by deceleration of the motor.

The method of controlling the washing machine according to an embodiment of the disclosure, may further include converting the DC voltage of the DC link capacitor and charging an energy storage device, when a voltage of the DC link capacitor becomes equal to or greater than a first certain voltage due to regenerative braking caused by deceleration of the motor.

The method of controlling the washing machine, according to an embodiment of the disclosure, may further include discharging energy from the energy storage device to the DC link capacitor when the voltage of the DC link capacitor becomes less than or equal to a second certain voltage.

The method of controlling the washing machine, according to an embodiment of the disclosure, may further include stopping the discharging of the energy from the energy storage device to the DC link capacitor when the voltage of the DC link capacitor becomes a third certain voltage.

**Brief** Description of Drawings

FIG. 1 is a view illustrating a structure of a home appliance according to an embodiment of the disclosure.

FIG. 2A is a schematic diagram of an inverter and a motor in a home appliance according to an embodiment of the disclosure.

FIG. 2B is a schematic diagram of respective equivalent circuits of an inverter and a motor in a home appliance according to an embodiment of the disclosure.

FIG. 2C is an equivalent circuit during short braking of the motor in the home appliance according to an embodiment of the disclosure.

FIG. 2D is an equivalent circuit during short braking of the motor in the home appliance according to an embodiment of the disclosure.

FIG. 3A is a circuit diagram illustrating a current flow during a switched-on state in a buck converter according to an embodiment of the disclosure.

FIG. 3B is a circuit diagram illustrating a current flow during a switched-off state in the buck converter according to an embodiment of the disclosure.

FIG. 3C is a waveform diagram illustrating an inductor voltage and an inductor current in the buck converter according to an embodiment of the disclosure.

FIG. 4A is a circuit diagram illustrating a current flow during a switched-on state in a boost converter according to an embodiment of the disclosure.

FIG. 4B is a circuit diagram illustrating a current flow during a switched-off state in a boost converter according to an embodiment of the disclosure.

FIG. 4C is a waveform diagram illustrating an inductor voltage and an inductor current in the boost converter according to an embodiment of the disclosure.

FIG. 5 is a circuit diagram illustrating use of regenerative braking energy of a motor using a battery and a load in a home appliance.

FIG. 6A is a configuration diagram of an inverter for driving a motor in a home appliance.

FIG. 6B is a configuration diagram of an inverter for driving a motor in a home appliance.

FIG. 7 is a diagram of a regenerative braking configuration during motor braking according to an embodiment of the disclosure.

FIG. 8 is a diagram of a regenerative braking configuration during motor braking according to an embodiment of the disclosure.

FIG. 9 is a diagram of a regenerative braking configuration during motor braking according to an embodiment of the disclosure.

FIG. 10 is a diagram of a regenerative braking configuration during motor braking according to an embodiment of the disclosure.

FIG. 11 is a diagram of a regenerative braking configuration during motor braking according to an embodiment of the disclosure.

FIG. 12 is a diagram of a regenerative braking configuration during motor braking according to an embodiment of the disclosure.

FIG. 13 is a diagram of a regenerative braking configuration during motor braking according to an embodiment of the disclosure.

FIG. 14 is a diagram of a regenerative braking configuration during motor braking according to an embodiment of the disclosure.

FIG. 15 is a graph illustrating variations in a voltage and a current for each stage of regenerative braking in the home appliance according to an embodiment of the disclosure.

FIG. 16 is a diagram illustrating an operation of charging regenerative braking energy in an energy storage device through a controller's operation, according to an embodiment of the disclosure.

FIG. 17 illustrates graphs illustrating a voltage and a current during regenerative braking according to an embodiment of the disclosure.

FIG. 18 is a graph illustrating a voltage and a current during discharge in an energy storage device according to an embodiment of the disclosure.

FIG. 19 is a graph illustrating an operation of discharging from an energy storage device to a direct current (DC) link capacitor, according to an embodiment of the disclosure.

FIG. 20 is a diagram illustrating an operation of discharging from an energy storage device to a load, according to an embodiment of the disclosure.

FIG. 21 is a graph illustrating a DC link capacitor voltage stabilization sequence according to an embodiment of the disclosure.

FIG. 22 is a waveform diagram of a dewatering mode of a washing machine according to an embodiment of the disclosure.

FIG. 23 is a waveform diagram when an overvoltage is generated when a motor stops, according to an embodiment of the disclosure.

FIG. 24 is a block diagram of a home appliance according to an embodiment of the disclosure.

FIG. 25 is a flowchart of an energy control method due to regenerative braking in a home appliance, according to an embodiment of the disclosure.

FIG. 26 is a flowchart of a discharging control method of an energy storage device in a home appliance, according to an embodiment of the disclosure.

Mode for Invention

Various embodiments and terms used herein are not intended to limit the technical features mentioned herein to particular embodiments, and it is to be appreciated that all changes, equivalents, and/or substitutes that do not depart from the spirit and technical scope are encompassed in the disclosure.

Regarding the description of the drawings, like reference numerals denote similar or related elements.

The singular form of a noun corresponding to an item may include one item or a plurality of items, unless a relevant context clearly dictates otherwise.

Each of expressions "A or B", "at least one of A and B", "at least one of A or B", and "one or more of A and/or B", "A, B, or C," "at least one of A, B, and C", and "at least one of A, B, or C" may include any one of listed items and all of at least one combination of the items.

The term "and/or" used herein includes any and all combinations of one or more of the associated listed items.

The terms such as, for example, "first", "second", "primarily", or "secondary" used herein may represent various elements regardless of order and/or importance, and do not limit corresponding elements. These terms may be used for distinguishing one element from another element.

When an element (e.g., a first element) is mentioned as being "coupled to" or "connected to" another element (e.g., a second element) together with or without the term "operatively" or "communicatively", this may mean that the element may be directly (e.g., by wire) or wirelessly coupled to the other element or another (e.g., a third element) may exist between the element and the other element.

The terms such as, for example, "including," "having," and "comprising" used herein are intended to indicate the existence of the features, numbers, steps, actions, components, parts, or combinations thereof mentioned in the disclosure, and are not intended to preclude the possibility that one or more other features, numbers, steps, actions, components, parts, or combinations thereof may exist or may be added.

When a component is said to be "connected to", "coupled to", "supported by" or "contact" another component, this may include not only a case where the components are directly connected to, coupled to, supported by, or contact each other, but also a case where the components are indirectly connected to, coupled to, supported by, or contact with each other through a third component.

When a component is said to be located "on" another component, this includes not only a case in which a component is in contact with another component, but also a case in which another component exists between two components.

Embodiments of the disclosure are described in detail herein with reference to the accompanying drawings so that this disclosure may be easily performed by one of ordinary skill in the art to which the disclosure pertains. Embodiments of the disclosure may, however, be embodied in many different forms and should not be construed as being limited to the embodiments set forth herein. In the drawings, parts irrelevant to the description are omitted for simplicity of explanation, and like numbers refer to like elements throughout.

According to an embodiment of the disclosure, provided are a method of efficiently managing regenerative braking energy resulting from stoppage or deceleration of a motor in a home appliance including the motor, and a home appliance that employs this regenerative braking energy management method. In some aspects, when the voltage of a DC link capacitor increases due to regenerative braking energy resulting from the stoppage or deceleration of a motor in a home appliance including the motor, the home appliance may control the increase of the voltage of the DC link capacitor to thereby increase safety of the overall home appliance including the DC link capacitor.

Home appliances may include electrical mechanisms and machines used at home. According to an embodiment of the disclosure, home appliances may include devices fixedly placed at home or devices movable at home. The home may refer to not only a house but also an indoor space such as, for example, an office. Examples of the home appliances may include a television (TV), a digital video disk (DVD) player, audio equipment, a refrigerator, an air conditioner, a vacuum cleaner, an oven, a microwave oven, a washing machine, an air cleaner, a set-top box, a home automation control panel, a security control panel, a media box (e.g., Samsung HomeSync®), a game console, an electronic dictionary, an electronic key, a camcorder, an electronic frame, a speaker, an e-book reader, a desktop PC, a laptop PC, a netbook computer, a workstation, a server, a personal digital assistant (PDA), a portable multimedia players (PMP), an MP3 player, a medical device, and a camera. The home appliance according to an embodiment of the disclosure may include a home appliance that drives a motor.

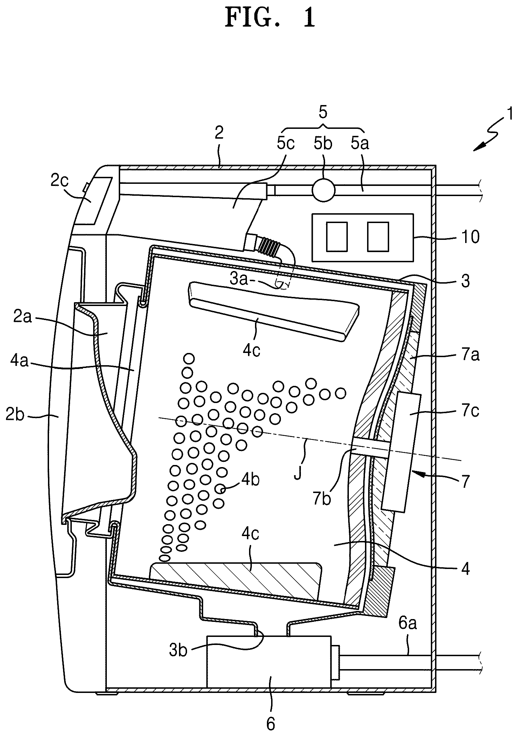

FIG. 1 is a view illustrating a structure of a home appliance according to an embodiment of the disclosure.

The home appliance according to an embodiment of the disclosure may be a washing machine 1. For example, the washing machine 1 may be configured to automatically execute a washing process consisting of operations such as, for example, washing, rinsing, dehydrating, and spin-drying. The washing machine 1 according to an embodiment of the disclosure may be a front loader washing machine (e.g., a drum washing machine) with a laundry inlet located on its front side or a top loader washing machine (for example, a top loading washing machine) with a laundry inlet located on its top side, and the washing machine 1 according to an embodiment of the disclosure may include a dryer.

The washing machine 1, as a home appliance illustrated in FIG. 1, may include a case 2, a fixed tank 3, a rotating tank 4 (or a rotating body), a water supply part 5, a drain pump 6, a driving part 7, and a controller 10.

The case 2 is a box-shaped container formed of a panel or a frame, and forms the exterior of the washing machine 1. A laundry inlet 2a for loading laundry is located on a front side of the case 2, and a door 2b with a transparent window is provided in the laundry inlet 2a such that the laundry inlet 2a may be opened and closed by the door 2b. An operating part 2c may be provided above the laundry inlet 2a of the case 2 to allow a user to operate the washing machine 1.

The fixed tank 3 is configured with a cylindrical container capable of storing water, and is provided inside the case 2 with one open inlet connected to the laundry inlet 2a. The fixed tank 3 may be supported by a damper (not illustrated) provided inside the case 2, while its central axis (rotation axis) is being inclined as illustrated in a one-dot-dashed line in the drawing.

The rotating tank 4 is configured with a cylindrical container with a smaller diameter than the fixed tank 3, and is provided in the fixed tank 3 such that its central axis coincides with the central axis of the fixed tank 3. According to the embodiment illustrated in FIG. 1, the rotating tank 4 rotates with a central axis of the rotating tank 4 inclined upwards from a horizontal direction toward the front side of the washing machine 1. A circular opening 4a facing the laundry inlet 2a is formed on the front side of the fixed tank 4. Laundry may be loaded into the rotating tank 4 through the laundry inlet 2a and the circular opening 4a.

A plurality of dehydrating holes 4b (only some illustrated in FIG. 1) may be formed on all of the lateral sides of the rotating tank 4, and lifters 4c for stirring may be mounted on the inner lateral sides of the rotating tank 4. The rotating tank 4 is rotatably supported on the laundry inlet 2a on the front side of the case 2.

The water supply unit 5 is installed over the fixed tank 3 and may include a water supply pipe 5a, a water supply valve 5b, and a detergent input part 5c. An upper end of the water supply pipe 5a is connected to a water supply source (not illustrated) outside the washing machine 1, and a lower end of the water supply pipe 5a is connected to a water supply hole 3a in the fixed tank 3. The water supply valve 5b and the detergent input part 5c may be provided in the middle of the water supply pipe 5a in order from the top. The detergent input part 5c may accommodate detergent, fabric softener, or the like and may put them into the fixed tank 3 together with water.

The drain pump 6 may be located below the fixed tank 3 and may be connected to the fixed tank 3 through a drain hole 3b. The drain pump 6 serves to discharge unnecessary water from the fixed tank 3 to the outside of the washing machine 1 through a drain 6a.

The driving part 7 may be mounted at the bottom of the fixed tank 3 and may include a unit base 7a, a shaft 7b, a motor 7c, and other components.

The unit base 7a may be located at the bottom of the fixed tank 3, and, according to an embodiment, may be configured with a disk-shaped member formed of a metal and a resin. A shaft insertion hole in a cylindrical shape extending along a rotation axis J may be formed at the center of the unit base 7a, and a pair of ball bearings (not illustrated) are mounted across both ends of the shaft insertion hole.

The shaft 7b is rotatably supported by the unit base 7a. In the embodiment illustrated in FIG. 1, the shaft 7b is supported by a pair of ball bearings provided in the shaft insertion hole of the unit base 7a. Then, the shaft 7b may rotate about the rotation axis J. The shaft 7b may protrude into the interior of the fixed tank 3 by penetrating through a rear side of the fixed tank 3, and an end of the shaft 7b is fixed to a bottom center of the rotating tank 4. For example, a rear portion of the rotating tank 4 is supported about the rotating axis J by the shaft 7b. As the driving part 7 directly drives the rotating tank 4, the rotating tank 4 rotates about the rotating shaft J according to driving of the motor 7c.

According to an embodiment of the disclosure, the rotation axis J coincides with a center line of the fixed tank 3, a center line of the rotating tank 4, and an axis line of the shaft 7b. The rotation axis J is disposed to be inclined with respect to a horizontal direction or be located on an extension of the horizontal direction.

The motor 7c rotates the rotary tub 4. According to an embodiment, the motor 7c rotates the shaft 7b fixed to the rotating tank 4, and the rotating tank 4 is rotated due to the rotation of the shaft 7b. The number of revolutions per hour of the motor 7c may be variable.

The controller 10 of the washing machine 1 may be located inside the washing machine 1, and controls an operation of the washing machine 1. For example, the controller 10 may be a printed circuit board (PCB) that includes a processor. The controller 10 may include hardware, such as, for example, a processor (or a microcomputer) or memory, and software, such as, for example, a control program. For example, the controller 10 may include at least one memory that stores at least one memory for storing an algorithm for controlling operations of components in the washing machine, data in the form of program, and software, and at least one processor that performs the above-described operations by using data stored in the at least one memory. The memory and the processor may be implemented as separate chips, respectively. The processor may include one or two or more processor chips or may include one or two or more processing cores. The memory may include one or two or more memory chips or may include one or two or more memory blocks. The memory and the processor may be implemented as a single chip.

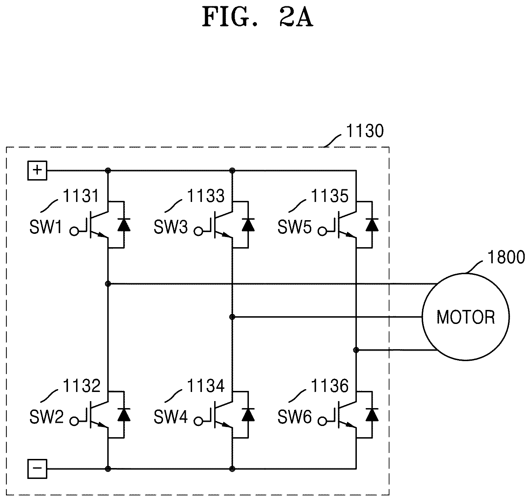

FIG. 2A is a schematic diagram of an inverter and a motor in a home appliance according to an embodiment of the disclosure.

In the disclosure, a method of regenerating and storing energy generated by the back electromotive force of a motor 1800 included in the home appliance when the motor 1800 is stopped, and a home appliance employing such a method are described. The home appliance may include the washing machine 1. Throughout the disclosure, the term 'energy' may be used interchangeably with the term 'power'.

FIG. 2A briefly illustrates a connection between an inverter 1130 and the motor 1800 within the home appliance.

When the inverter 1130 is a three-phase inverter, the inverter 1130 may include six switches SW1 1131, SW2 1132, SW3 1133, SW4 1134, SW5 1135, and SW6 1136, as illustrated in FIG. 2A. The inverter 1130 may drive the motor 1800 by converting a direct current (DC) voltage to an alternating current (AC) voltage through pulse width modulation (PWM) switching. In FIG. 2A, the inverter 1130 and the motor 1800 are illustrated as a three-phase inverter and a three-phase motor, respectively. However, embodiments are not limited thereto, and the inverter 1130 and the motor 1800 may be a single-phase inverter and a single-phase motor. Although not illustrated in FIG. 2A, a DC voltage may be established at an input terminal of the inverter 1130 by a DC link capacitor.

Throughout the disclosure, an inverter, a converter (including a DC/DC converter), and a rectifier (AC-DC rectifier) may be referred to as power converters or power conversion devices.

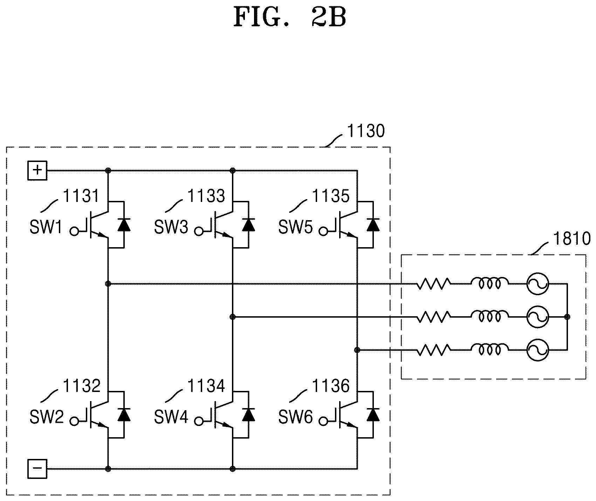

FIG. 2B is a schematic diagram of respective equivalent circuits of an inverter and a motor in a home appliance according to an embodiment of the disclosure.

In FIG. 2B, the motor 1800 may be replaced with a motor equivalent circuit 1810. The motor equivalent circuit 1810 may include resistance, inductance, and back electromotive force power for each three-phase wire.

A short braking method of short-circuiting a three-phase wire of the motor 1800 to consume the rotational energy of the motor 1800 in the resistance of the three-phase wire may be used as a method of stopping the motor 1800 of the home appliance. At this time, all mechanical kinetic energies of the motor 1800 are consumed as heat in the resistance of the three-phase wire.

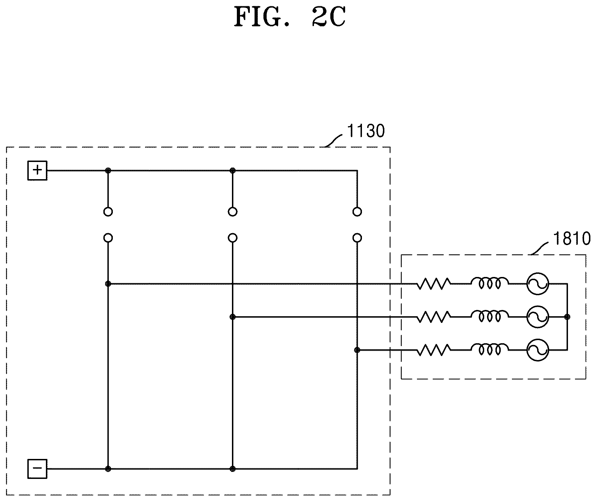

FIG. 2C is an equivalent circuit during short braking of the motor in the home appliance according to an embodiment of the disclosure.

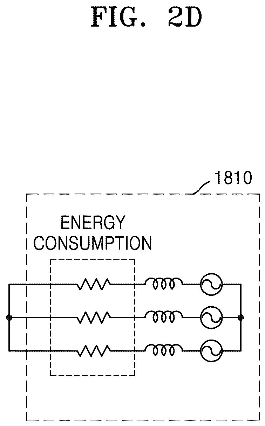

Referring to FIG. 2C, for short braking of the motor 1800, the home appliance turns off all of the upper switches SW1 1131, SW3 1133, and SW5 1135 in each leg of the inverter 1130, and turns on all of the lower switches SW2 1132, SW4 1134, and SW6 1136 in each leg of the inverter 1130. Each switch may be turned on/off by a processor or driving processor of the home appliance. Through this switch on/off operation, an equivalent circuit may be obtained during short braking of the motor 1800 as illustrated in FIG. 2C. The equivalent circuit according to FIG. 2C ultimately becomes the same circuit as an equivalent circuit during short braking according to FIG. 2D.

FIG. 2D is an equivalent circuit during short braking of the motor in the home appliance according to an embodiment of the disclosure.

According to FIG. 2D, because the three-phase wires of the motor 1800 are short-circuited and connected to each other, a back electromotive force generated when the motor 1800 is stopped is inevitably consumed in the resistance of the three-phase wires. The short braking method of the motor 1800 is relatively simple, but is unable to utilize the energy generated when the motor 1800 is stopped, and all of the energy is consumed as heat. Regenerative braking may be used as a stopping method capable of utilizing the energy generated when the motor 1800 is stopped, and the home appliance stops the motor 1800 while collecting the energy generated when the motor 1800 is stopped. This regenerative braking is more efficient in terms of energy consumption because the energy generated when the motor 1800 stops may be re-used.

In the disclosure, a circuit configuration allowing collection of the energy generated when the motor 1800 included in the home appliance is braked, and a method for stabilizing a voltage across both ends of the DC link capacitor during energy collection are described. In the disclosure, the home appliance is mainly described as a washing machine. However, a home appliance according to the disclosure is not limited to a washing machine, and the disclosure is also applicable to a dryer, an air conditioner, and a cordless vacuum cleaner, and the like, each including the motor 1800 and the inverter 1130, similar to a washing machine,

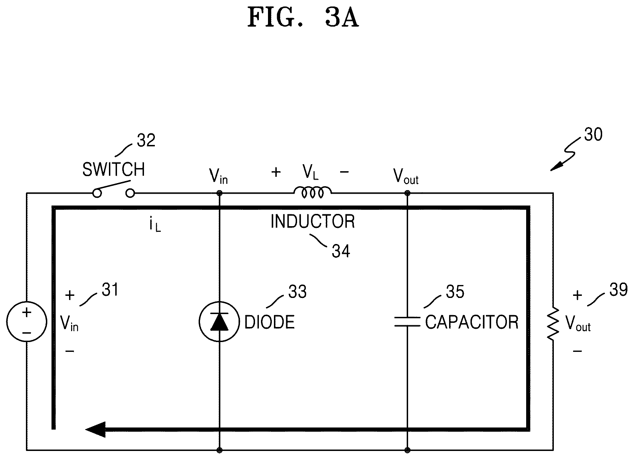

FIG. 3A is a circuit diagram illustrating a current flow during a switched-on state in a buck converter according to an embodiment of the disclosure.

The disclosure includes, for example, an embodiment of reducing a voltage across both ends of a DC link capacitor and using the reduced voltage in a 12V load or charging an energy storage device of a 30V DC voltage with energy. A voltage across both ends of the energy storage device is not limited to 30V, and may be any of various voltage values based on the specifications of the energy storage device. Although it is indicated that a 12V voltage is input to a load, this is an example, and the input voltage of the load may also have any of various voltage values. In any case, the voltage across both ends of the DC link capacitor is usually around 311V, and an embodiment of the disclosure supports reducing and using the voltage. Accordingly, FIG. 3A introduces a buck converter 30 for performing such a voltage reduction operation.

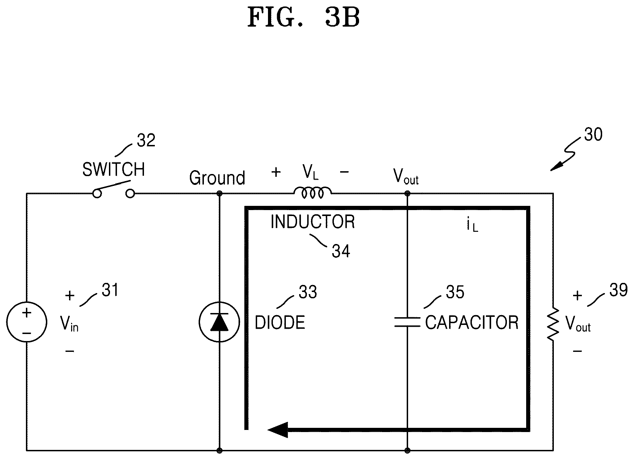

The buck converter 30 may convert a high-voltage input voltage Vin 31 into a low-voltage output voltage Vout 39 (i.e., perform buck converting). An embodiment of the disclosure may include using a switch 32, a diode 33, an inductor 34, and a capacitor 35 for buck converting, but are not limited thereto. Buck converter configurations of FIGS. 3A and 3B may vary based on a designer's choice.

FIG. 3A is a current flow diagram when the switch 32 is turned on in the buck converter 30, and FIG. 3B is a current flow diagram when the switch 32 is turned off in the buck converter 30.

In the buck converter 30, the input voltage Vin 31 is lowered through switching of the switch 32. As illustrated in FIG. 3A, when the switch 32 is turned on, a current $i_L$ flows through the inductor 34. In an example in which a voltage applied to both ends of the inductor 34 is $V_L$, Equation 1 below is established.

$$V_L = Vin - Vout \ ... \ [Equation \ 1]$$

Because the voltage $V_L = L(di/dt)$ applied to the inductor 34 is established, Equation 2 below may be derived.

$$\Delta i_L = \frac{V_{in} - V_{out}}{L} DTs, (0 < D < 1)$$

$$... \ [Equation \ 2]$$

Ts indicates a switching period of the switch 32 and D indicates an on duty of the switch 32. In an example in which the switch 32 is turned on, a current flows to the switch 32, the input power Vin 31 is stored as magnetic energy of the inductor 34, and the current increases. The voltage applied to the inductor 34 is Vin - Vout, and thus, becomes positive, and the ripple of the current $i_L$ also becomes positive.

FIG. 3B is a circuit diagram illustrating a current flow during a switched-off state in the buck converter according to an embodiment of the disclosure.

As illustrated in FIG. 3B, when the switch 32 is turned off, a current flows through the diode 33, the magnetic energy stored in the inductor 34 is released, and the current $i_L$ flowing in the inductor 34 decreases. The voltage $V_L$ applied to the inductor 34 becomes negative and a current ripple also becomes negative.

$$V_L = - Vout \ ... \ [Equation \ 3]$$

$$\Delta i_L = \frac{- V_{out}}{L} (1 - D)Ts, (0 < D < 1)$$

$$... \ [Equation \ 4]$$

Ts indicates a switching period of the switch 32 and D indicates an on duty of the switch 32.

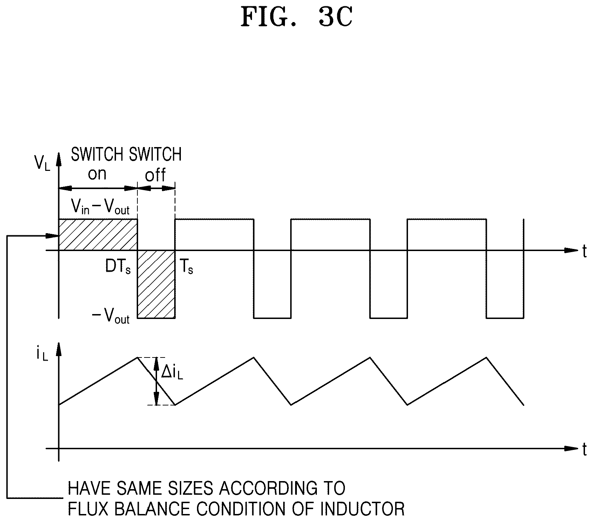

FIG. 3C is a waveform diagram illustrating an inductor voltage and an inductor current in the buck converter according to an embodiment of the disclosure.

Referring to FIG. 3C, an embodiment of the disclosure supports a flux balance condition of the inductor 34. For example, an embodiment of the disclosure support providing an inductor voltage and an inductor current in the buck converter in which the area of a rectangle associated with an on-state of the switch 32 is the same (e.g., equal area, same shape) as the area of a rectangle associated with an off-state of the switch 32. In some examples, the areas of two rectangles illustrated in $V_L$ while the switch 32 is on and while the switch 32 is off need to have the same sizes according to a flux balance condition of the inductor 34. In other words, an embodiment of the disclosure provides a buck converter in which the energy accumulated in the inductor 34 while the switch 32 is being turned on and the energy emitted from the inductor 34 when the switch 32 is being turned off are the same as each other, so Equation 5 below is established.

$$(Vin - Vout)DTs = Vout(1-D)Ts,$$

$$\frac{Vout}{Vin} = D$$

$$... \ [Equation \ 5]$$

Therefore, by controlling an on duty D of the switch 32, a size of an output voltage Vout compared to an input voltage Vin may be determined. For example, given that the input voltage Vin is 311V and the output voltage Vout is 30V, D is 0.096. As another example, given that the input voltage Vin is 311V and the output voltage Vout is 12V, D is 0.039.

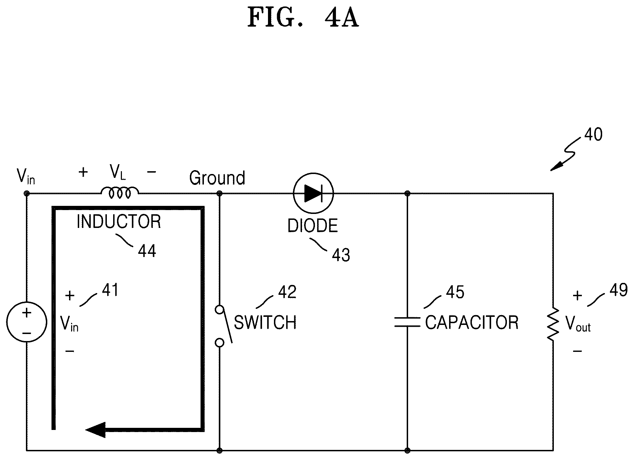

FIG. 4A is a circuit diagram illustrating a current flow during a switched-on state in a boost converter according to an embodiment of the disclosure.

In a boost converter 40, an input voltage Vin 41 is increased through switching of a switch 42. As illustrated in FIG. 4A, when the switch 42 is turned on, a current flows to the switch 42, input power is stored as magnetic energy in an inductor 44, and a current $i_L$ increases. A voltage $V_L$ applied to both ends of the inductor 44 becomes positive and a ripple of the current $i_L$ also becomes positive.

$$V_L = Vin \ ... \ \text{[Equation 6]}$$

$$\Delta i_L = \frac{v_{in}}{L}DTs, (0 < D < 1) \qquad ... \qquad \text{[Equation 7]}$$

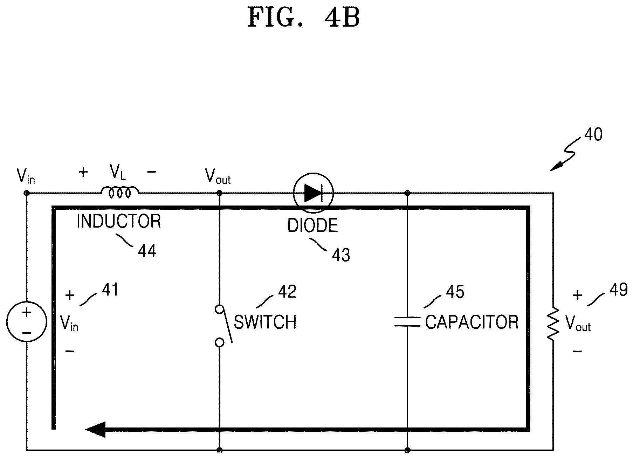

FIG. 4B is a circuit diagram illustrating a current flow during a switched-off state in a boost converter according to an embodiment of the disclosure.

When the switch 42 is turned off in the boost converter 40, a current flows through the diode 43, the magnetic energy stored in the inductor 44 is released, and the current $i_L$ decreases. A voltage applied to the inductor 44 is Vin-Vout. In this case, because Vout is greater than Vin, the voltage applied to the inductor 44 becomes negative, and the ripple of the current $i_L$ also becomes negative.

$$V_L = Vin - Vout \ ... \ \text{[Equation 8]}$$

$$\Delta i_L = \frac{v_{in} - v_{out}}{L}(1 - D)Ts, (0 < D < 1) \qquad ... \ \text{[Equation 9]}$$

Ts indicates a switching period of the switch 42 and D indicates an on duty of the switch 42.

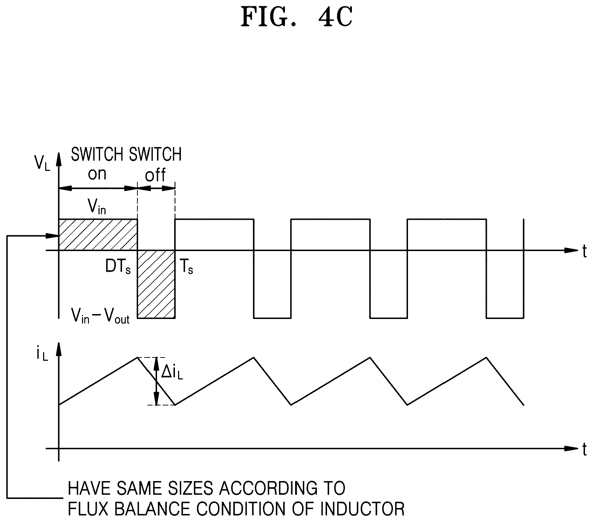

FIG. 4C is a waveform diagram illustrating an inductor voltage and an inductor current in the boost converter according to an embodiment of the disclosure.

Referring to FIG. 4C, an embodiment of the disclosure supports a flux balance condition of the inductor 44. For example, embodiments of the disclosure support providing an inductor voltage and an inductor current in the boost converter in which the area of a rectangle associated with an on-state of the switch 42 is the same (e.g., equal area, same shape) as the area of a rectangle associated with an off-state of the switch 42. In some examples, the areas of two rectangles illustrated in $V_L$ while the switch 42 is on and while the switch 42 is off need to have the same sizes according to a flux balance condition of the inductor 44. In other words, an embodiment of the disclosure provide a boost converter in which the energy accumulated in the inductor 44 while the switch 42 is being turned on and the energy emitted from the inductor 44 when the switch 42 is being turned off are the same as each other, so Equation 10 below is established.

$$(Vin)DTs = -(Vin-Vout)(1-D)Ts,$$
$$\frac{Vin}{Vo} = 1 - D \qquad ... \qquad \text{[Equation 10]}$$

Therefore, by controlling an on duty D of the switch 42, a size of an output voltage Vout compared to an input voltage Vin may be determined. For example, given that the input voltage Vin is 30V and the output voltage Vout is 311V, D is 0.904.

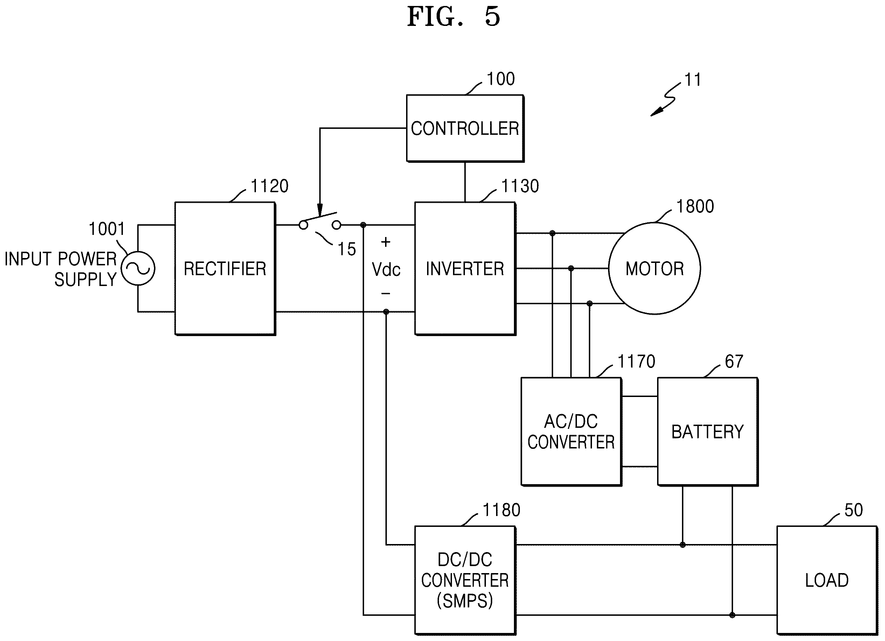

FIG. 5 is a circuit diagram illustrating the use of regenerative braking energy of a motor using a battery and a load in a home appliance.

In a device 11 according to FIG. 5, energy generated by a back electromotive force generated during braking of a motor 1800 may be charged to a battery 67 by an AC/DC converter 1170. In the AC/DC converter 1170, an AC refers to an alternating current voltage and a DC refers to a direct current voltage. Therefore, the AC/DC converter 1170 may be referred to as a converter that converts an alternating current (AC) voltage to a direct current (DC) voltage. In an example in which regenerative braking energy resulting from braking of the motor 1800 exceeds the amount of rated charge of a battery 67, the DC/DC converter 1180 does not drive a load 50 but a controller 100 may control the DC/DC converter 1180, the AC/DC converter 1170, and the battery 67 such that a load 50 consumes energy associated with driving the load 50. In some examples, the load 50 may consume at least a portion of the regenerative braking energy resulting from braking of the motor 1800. The DC/DC converter 1180 may be referred to as a converter that converts a DC voltage to another level of DC voltage.

According to an embodiment of the disclosure, the load 50 may be a DC load such as, for example, a control PCB, a processor, a user interface, or a communication interface. The DC load may include, but is not limited to, loads of 12V, 5V, and/or 3.3V. The DC/DC converter 1180 may include a switched mode power supply (SMPS). The regenerative braking energy may also be used as restart energy used by the motor 1800 to accelerate again or restart a rotational motion.

**In** a method according to FIG. 5, the motor 1800 directly charges the battery 67 by using the AC/DC converter 1170, which is a three-phase converter, and, only when the back electromotive force of the motor 1800 is greater than the voltage of the battery 67, charging may occur, so an amount of regenerative braking energy to be utilized may be limited. In other words, in the method according to FIG. 5, it is impossible to utilize all of the regenerative braking energy generated during braking of the motor 1800. **In** some aspects, because the AC/DC converter 1170 is directly connected to the motor 1800, an operation such as, for example, stabilization of a DC link capacitor voltage is not performed.

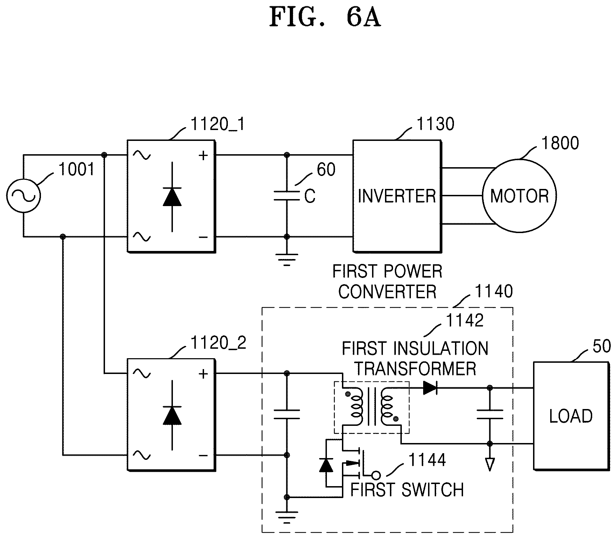

FIG. 6A is a configuration diagram of an inverter for driving a motor in a home appliance.

**In** FIG. 6A, a portion including an inverter 1130 for driving the motor 1800, a DC link capacitor 60, and a first rectifier 1120_1 for supplying a DC voltage to the DC link capacitor 60 is a typical inverter configuration. The configuration and a regenerative braking configuration according to FIGS. 6A through 14 will now be referred to as a power conversion device. In FIG. 6A, a second rectifier 1120_2, and a first power converter 1140 for converting a DC voltage generated through the second rectifier 1120_2 into a DC voltage appropriate for and capable of driving the load 50 are added. The load 50 may be a load that requires a signal level (e.g., voltage value) of DC voltage such as, for example, 12V, 5V, or 3.3V, and may include, for example, a load such as, for example, a PCB or a processor (microcomputer). According to an embodiment of the disclosure, the load 50 may include a user interface. In other words, the power used by the load 50 may be power for driving the user interface. The user interface may include an input interface and an output interface. The input interface may include a touch display, physical buttons, a microphone for voice input, or other interface devices. The output interface may include a display and/or a speaker. According to an embodiment of the disclosure, the load 50 may include a communication interface. In other words, the power used by the load 50 may include power for driving the communication interface. The communication interface may include a short-range communication interface and a long-distance communication interface. Examples of the short-range communication interface may include, but are not limited to, a Bluetooth communication interface, a Bluetooth Low Energy (BLE) communication interface, a near field communication (NFC) interface, a Wi-Fi communication interface, a ZigBee communication interface, an infrared Data Association (IrDA) communication interface, a Wi-Fi direct (WFD) communication interface, an ultra wideband (UWB) communication interface, and an Ant+ communication interface. The long-distance communication interface may exchange a wireless signal with at least one of a base station, an external terminal, or a server on a mobile communication network. Here, examples of the wireless signal may include a voice call signal, a video call signal, and various types of data according to text/multimedia message exchange. The long-distance communication interface may include, but is not limited to, a 3G module, a 4G module, a 5G module, an LTE module, an NB-IoT module, or an LTE-M module. According to an embodiment of the disclosure, the power conversion device according to FIG. 6A may communicate with a server or other electrical device outside the home appliance and transmit and receive data, through the communication interface.

In FIG. 6A, the first power converter 1140 according to an embodiment of the disclosure may use a power branched from an input power supply 1001 by using the second rectifier 1120_2 separately from the first rectifier 1120_1 used for the inverter 1130. The first power converter 1140 may include a first insulation transformer 1142 and a first switch 1144 for DC/DC (DC voltage conversion) conversion. The first power converter 1140 is illustrated as using the first insulation transformer 1142. However, according to an embodiment of the disclosure, the first power converter 1140 may use an insulation converter. The first power converter 1140 may include an SMPS for supplying a DC voltage having a signal level to a home appliance. According to an embodiment of the disclosure, the first power converter 1140 may include a fly-back converter.

In FIG. 6A, means for collecting regenerative braking energy due to a back electromotive force generated when the motor 1800 decelerates or stops is not included. Therefore, when the motor 1800 decelerates or stops, the voltage of the DC link capacitor 60 may increase and exceed a withstand voltage standard of the DC link capacitor 60. Such problems with the safety of the inverter configuration of the home appliance may occur.

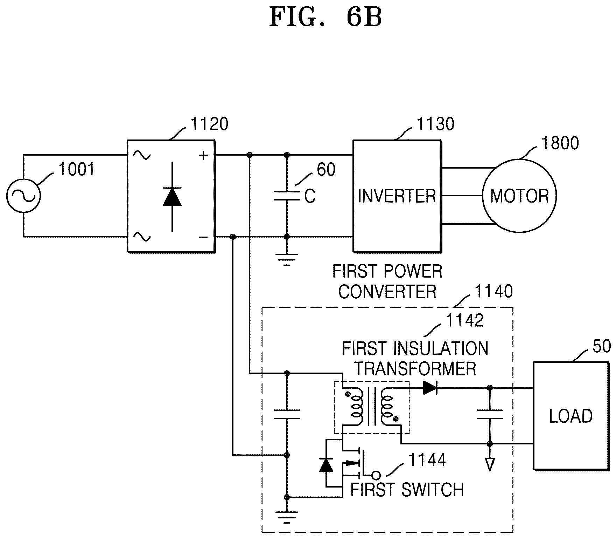

FIG. 6B is a configuration diagram of an inverter for driving a motor in a home appliance.

Similar to FIG. 6A, in FIG. 6B, a portion including the inverter 1130 for driving the motor 1800, the DC link capacitor 60, and a rectifier 1120 for supplying a DC voltage to the DC link capacitor 60 is a typical inverter configuration. The inverter configuration of FIG. 6B is different from the configuration of FIG. 6A in that a DC voltage of the DC link capacitor 60 rather than a DC voltage generated using a separate rectifier from the input power supply 1001 is used as a DC voltage input to the first power converter 1140.

The first power converter 1140 may include a first insulation transformer 1142 and a first switch 1144 for DC/DC (DC voltage conversion) conversion. The first power converter 1140 is illustrated as using the first insulation transformer 1142. However, according to an embodiment of the disclosure, the first power converter 1140 may use a non-insulation converter.

Because the load 50 has been described herein in detail with reference to FIG. 6A, a description thereof will be omitted here.

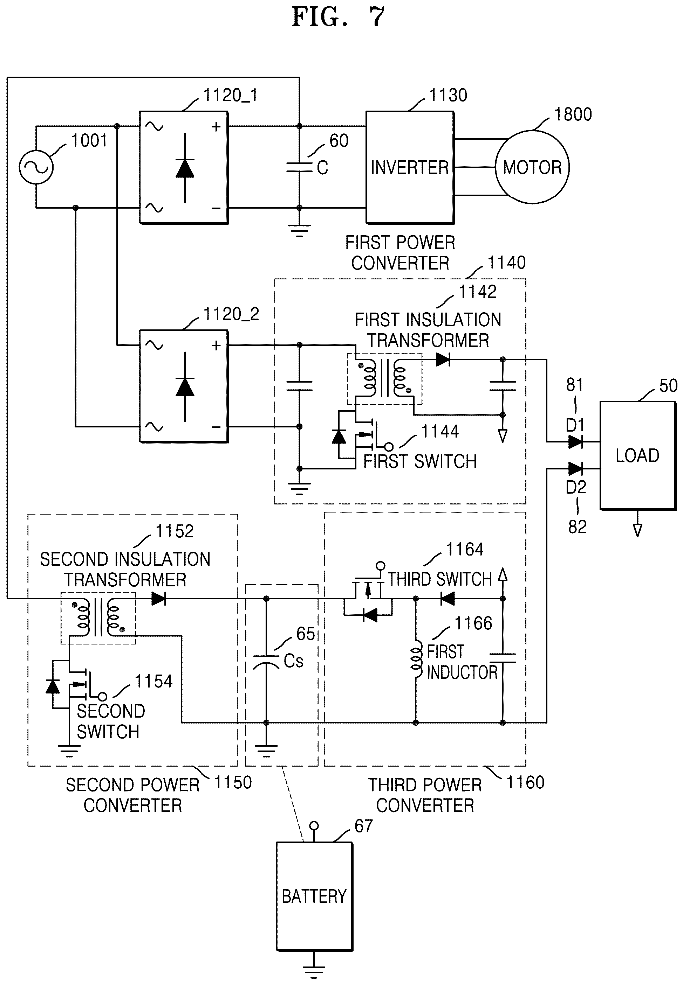

FIG. 7 is a diagram of a regenerative braking configuration during motor braking according to an embodiment of the disclosure.

In FIG. 7, a portion including an inverter 1130 for driving the motor 1800, a DC link capacitor 60, and a first rectifier 1120_1 for supplying a DC voltage to the DC link capacitor 60 is a typical inverter configuration. The first rectifier 1120_1 may supply the DC voltage by rectifying an AC voltage of the input power supply 1001. Similar to FIG. 6A, the regenerative braking configuration of FIG. 7 includes the second rectifier 1120_2, and the first power converter 1140 for converting a DC generated through the second rectifier 1120_2 into an appropriate DC voltage capable of driving the load 50. In an embodiment, the second rectifier 1120_2 may be included in or integrated with (not illustrated) the first power converter 1140. In an embodiment, the second rectifier 1120_2 may be separate from the first power converter 1140. In some implementations later described herein, the second rectifier 1120_2 may be omitted.

The load 50 may require a DC voltage having a signal level, such as, for example, 12V, 5V, or 3.3V. For example, the load 50 may include a PCB, a processor (microcomputer), a user interface, or a communication interface. According to an embodiment of the disclosure, 12V may be input to the load 50 by the first power converter 1140, and the PCB included in the load 50 may reduce 12V to 5V (or 3.3V) for internal use by using a voltage regulator.

In FIG. 7, the first power converter 1140 according to an embodiment of the disclosure may use a power branched from the input power supply 1001 by using the second rectifier 1120_2 separately from the first rectifier 1120_1 used for generating a DC voltage established in the DC link capacitor 60. As described herein with reference to FIG. 6A, the first power converter 1140 may include a first insulation transformer 1142 and a first switch 1144 for DC/DC (DC voltage conversion) conversion. In FIG. 7, the first power converter 1140 is illustrated as using the first insulation transformer 1142. However, according to an embodiment of the disclosure, the first power converter 1140 may use a non-insulation converter. The first power converter 1140 may include an SMPS for supplying a DC voltage having a signal level to a home appliance.

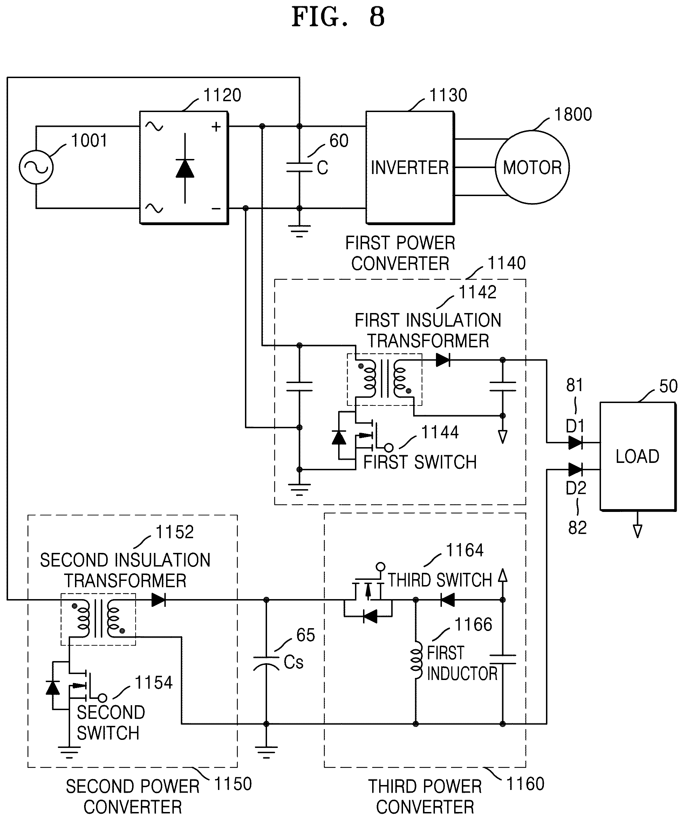

The regenerative braking configuration according to FIG. 7 may include a second power converter 1150. The second power converter 1150 may include a DC/DC converter that converts the DC voltage received from the DC link capacitor 60 into a DC voltage of a different level. The second power converter 1150 may convert the DC voltage of the DC link capacitor 60 into a different level of DC voltage due to an on-off operation of a second switch 1154. A processor (not illustrated) of the home appliance may control the second power converter 1150 to charge a super capacitor 65 with the DC voltage obtained by the second power converter 1150. Accordingly, the processor may control the regenerative braking energy generated due to the deceleration or stoppage of the motor 1800 to be stored in an energy storage device including the super capacitor 65. According to an embodiment of the disclosure, the super capacitor 65 included in the energy storage device may be replaced by a battery 67. According to an embodiment of the disclosure, although an output side of the second power converter 1150 is illustrated with the super capacitor 65 in FIG. 7, the super capacitor 65 may be replaced with an energy storage device, and the energy storage device may include at least one of the super capacitor 65 or the battery 67. In other words, the energy storage device may include one of the super capacitor 65 or the battery 67, or may include both of them. Portions illustrated as the super capacitor 65 in FIGS. 8 through 14 may be each equally replaced by an energy storage device, and the energy storage device may include one of the super capacitor 65 or the battery 67 or may include both the super capacitor 65 and the battery 67.

According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65. The certain voltage may be, for example, a voltage that is greater than the voltage between both ends of the DC link capacitor 60 by 5V or more. For example, given that the DC voltage established in the DC link capacitor 60 by the rectifiers 1120 and 1120_1 when there is no regenerative braking is 311V, the certain voltage may be 316V. Of course, this is an embodiment, and the certain voltage may be lower (e.g., 314V) or higher (e.g., 320V). The super capacitor 65 may be a device in which a plurality of capacitors are connected in series or parallel. The voltage across both ends of the super capacitor 65 may be, for example, 30V, but is not limited thereto, and may be higher or lower than 30V.

According to an embodiment of the disclosure, the second power converter 1150 may include a buck converter that reduces the received DC voltage. According to an embodiment of the disclosure, the second power converter 1150 may include a boost converter that increases the received DC voltage.

The processor (not illustrated) of the home appliance including the regenerative braking configuration according to FIG. 7 may monitor the voltage of the DC link capacitor 60, and, when the voltage of the DC link capacitor 60 becomes equal to or greater than the certain voltage, may control the second switch 1154 of the second power converter 1150 to be turned on. In an example in which the second switch 1154 is turned on, the regenerative braking energy generated by the stoppage or deceleration of the motor 1800 is collected by the second power converter 1150 and is temporarily stored in the super capacitor 65, and then, after passing through a third power converter 1160, may be consumed by the load 50. In an example in which the second switch 1154 is turned on and thus the second power converter 1150 operates, appropriate voltage reduction is achieved by the second isolation transformer 1152 and power may be stored in the super capacitor 65.

According to an embodiment of the disclosure, the super capacitor 65 may function as an energy storage device that stores regenerative braking energy. According to an embodiment of the disclosure, the super capacitor 65 may be replaced by the battery 67 capable of charging and discharging.

The home appliance may further include the third power converter 1160, which inputs the DC voltage established in the super capacitor 65. The third power converter 1160 may include a third switch 1164 and a first inductor 1166. According to an embodiment of the disclosure, the processor of the home appliance may control the on/off operation of the third switch 1164 to reduce the DC voltage established in the super capacitor 65 and provide the reduced DC voltage to the load 50. Power may be supplied to the load 50 operating according to a certain voltage level (e.g., 12V, 5V, or 3.3V) due to respective operations of the third switch 1164 and the first inductor 1166 included in the third power converter 1160. Because examples of loads which may be included in the load 50 have been described herein in detail with reference to FIG. 6A, a description thereof will be omitted here.

According to an embodiment of the disclosure, the processor of the home appliance may control the home appliance such that power generated by regenerative braking is used to drive the communication interface included in the load 50. According to an embodiment of the disclosure, for example, the processor of the home appliance may control the home appliance such that the power generated by regenerative braking is used to drive a Wi-Fi communication interface to achieve Wi-Fi communication. The configuration of the load 50 of the home appliance as described herein is applicable to all cases where there is the load 50 in the configuration according to FIGS. 7 through 12 of the disclosure.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 may function as a selector for selecting one from among the output of the first power converter 1140 and the output of the third power converter 1160 as an input to the load 50. In an example in which the output of the first power converter 1140 is maintained at 12.0V by the first diode 81 and the output of the third power converter 1160 is maintained at 12.2V by the second diode 82, a voltage on the side of the second diode 82, which outputs a slightly higher voltage to the load 50, becomes a voltage used by the load 50. In an example in which the second power converter 1150 and/or the third power converter 1160 do not operate due to non-generation of regenerative braking energy, and as a result, the voltage on the side of the second diode 82 becomes less than 12.0V, the voltage of 12.0V transmitted from the first diode 81 may be selected as the voltage used in the load 50. According to an embodiment of the disclosure, the second power converter 1150 and/or the third power converter 1160 may include a DC/DC converter.

FIG. 8 is a diagram of a regenerative braking configuration during motor braking according to an embodiment of the disclosure.

In FIG. 8, a portion including an inverter 1130 for driving the motor 1800, a DC link capacitor 60, and a rectifier 1120 for supplying a DC voltage to the DC link capacitor 60 is a typical inverter configuration. In FIG. 8, as in FIG. 6B, the first power converter 1140 may be used to convert the DC voltage established in the DC link capacitor 60 into a DC voltage appropriate for and capable of driving the load 50. The load 50 may require a DC voltage having a signal level, such as, for example, 12V, 5V, or 3.3V. For example, the load 50 may be a load including a PCB, a processor (microcomputer), a user interface, or a communication interface. According to an embodiment of the disclosure, 12V may be input to the load 50 by the first power converter 1140, and the PCB included in the load 50 may reduce 12V to 5V for internal use.

In FIG. 8, the first power converter 1140 according to an embodiment of the disclosure may share the DC voltage of the DC link capacitor 60 with the inverter 1130 without using a separate rectifier other than the rectifier 1120 for generating a DC voltage. The first power converter 1140 may include a first insulation transformer 1142 and a first switch 1144 for DC/DC (DC voltage conversion) conversion. In FIG. 8, the first power converter 1140 is illustrated as using the first insulation transformer 1142. However, according to an embodiment of the disclosure, the first power converter 1140 may use a non-insulation converter. The first power converter 1140 may include an SMPS for supplying a DC voltage having a signal level to a home appliance.

The regenerative braking configuration according to FIG. 8 may include a second power converter 1150. The second power converter 1150 may include a DC/DC converter that converts the DC voltage received from the DC link capacitor 60 into a DC voltage of a different level. The second power converter 1150 may convert the DC voltage of the DC link capacitor 60 into a different level of DC voltage due to respective on-off operations of a second insulation transformer 1152 and a second switch 1154. A processor (not illustrated) of the home appliance may control the second power converter 1150 to charge a super capacitor 65 with the DC voltage obtained by the second power converter 1150. Accordingly, the processor may control the regenerative braking energy generated due to the deceleration or stoppage of the motor 1800 to be stored in an energy storage device such as, for example, the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may operate the second switch 1154 of the second power converter 1150 to control the second power converter 1150 to store the regenerative braking energy in the super capacitor 65. The certain voltage may be, for example, a voltage that is greater than the voltage between both ends of the DC link capacitor 60 by 5V or more. For example, given that the DC voltage established in the DC link capacitor 60 by the rectifiers 1120 and 1120_1 when there is no regenerative braking is 311V, the certain voltage may be 316V. Of course, this is an embodiment, and the certain voltage may be lower (e.g., 314V) or higher (e.g., 320V). According to an embodiment of the disclosure, the super capacitor 65 may be replaced by the battery 67 capable of charging and discharging.

According to an embodiment of the disclosure, the second power converter 1150 may include a buck converter that reduces the received DC voltage. According to an embodiment of the disclosure, the second power converter 1150 may include a boost converter that increases the received DC voltage.

The processor of the home appliance including the regenerative braking configuration according to FIG. 8 may monitor the voltage of the DC link capacitor 60, and, when the voltage of the DC link capacitor 60 becomes equal to or greater than the certain voltage, may control the second switch 1154 of the second power converter 1150 to be turned off. In an example in which the second switch 1154 is turned off, the regenerative braking energy generated by the stoppage or deceleration of the motor 1800 is collected by the second power converter 1150, passes through a third power converter 1160, and is consumed by the load 50. **In** an example in which the second switch 1154 is turned on and thus the second power converter 1150 operates, appropriate voltage reduction is achieved by the second isolation transformer 1152 and power may be stored in the super capacitor 65. According to an embodiment of the disclosure, the super capacitor 65 may store the regenerative braking energy. In an example in which the second switch 1154 is turned on-off, an input/output voltage gain is D*n/(1-D), where D is the duty ratio of the second switch 1154 and n is a turn ratio of the second isolation transformer 1152. Accordingly, the voltage of the DC link capacitor 60 may be reduced by on-duty of the second switch 1154 and the turn ratio of the second insulation transformer 1152.

The home appliance may further include the third power converter 1160, which receives the DC voltage established in the super capacitor 65. The third power converter 1160 may include a third switch 1164 and a first inductor 1166. According to an embodiment of the disclosure, the processor of the home appliance may control the on/off operation of the third switch 1164 to reduce the DC voltage established in an energy storage device, such as, for example, the super capacitor 65, and provide the reduced DC voltage to the load 50. Power may be supplied to the load 50 operating according to a certain voltage level (e.g., 12V, 5V, or 3.3V) due to respective operations of the third switch 1164 and the first inductor 1166 included in the third power converter 1160. Because examples of loads which may be included in the load 50 have been described herein in detail with reference to FIG. 6A, a description thereof will be omitted here.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 may function as a selector for selecting one from among the output of the first power converter 1140 and the output of the third power converter 1160 as an input to the load 50. In an example in which the output of the first power converter 1140 is maintained at 12.0V by the first diode 81 and the output of the third power converter 1160 is maintained at 12.2V by the second diode 82, a voltage on the side of the second diode 82, which outputs a slightly higher voltage than that on the side of the first diode 81 to the load 50, is selected as a voltage used by the load 50. In an example in which the second power converter 1150 and/or the third power converter 1160 do not operate due to non-generation of regenerative braking energy, and the voltage on the side of the second diode 82 becomes less than 12.0V, the voltage of 12.0V transmitted from the first diode 81 becomes the voltage used in the load 50. According to an embodiment of the disclosure, the second power converter 1150 and the third power converter 1160 may include a DC/DC converter.

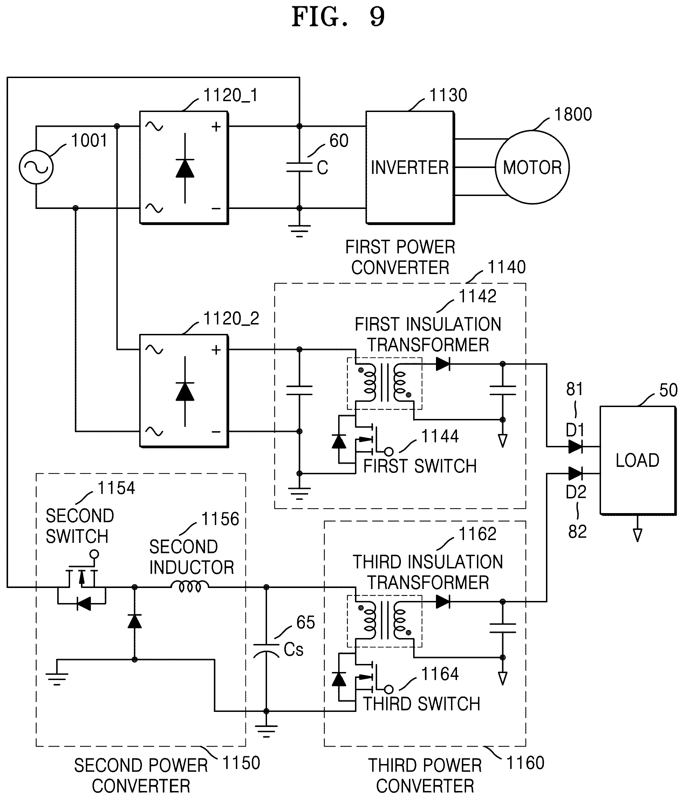

FIG. 9 is a diagram of a regenerative braking configuration during motor braking according to an embodiment of the disclosure.

In FIG. 9, a portion including an inverter 1130 for driving the motor 1800, a DC link capacitor 60, and a first rectifier 1120_1 for supplying a DC voltage to the DC link capacitor 60 is a typical inverter configuration. A first power converter 1140 may convert a DC voltage generated through a second rectifier 1120_2 into a DC voltage appropriate for and capable of driving the load 50. The load 50 may require a DC voltage having a signal level, such as, for example, 12V, 5V, or 3.3V. For example, the load 50 may be a load such as, for example, a PCB, a processor (microcomputer), a user interface, or a communication interface. According to an embodiment of the disclosure, 12V may be input to the load 50 by the first power converter 1140, and the PCB included in the load 50 may reduce 12V to 5V by using a voltage regulator for internal use.

In FIG. 9, the first power converter 1140 according to an embodiment of the disclosure may use a power branched from the input power supply 1001 by using the second rectifier 1120_2 separately from the first rectifier 1120_1 for generating a DC voltage established in the DC link capacitor 60. As described herein with reference to FIG. 6A, the first power converter 1140 may include a first insulation transformer 1142 and a first switch 1144 for DC/DC conversion (DC voltage conversion). In FIG. 9, the first power converter 1140 is illustrated as using the first insulation transformer 1142. However, according to an embodiment of the disclosure, a non-insulation converter may be used. The first power converter 1140 may include an SMPS for supplying a DC voltage having a signal level to a home appliance.

The regenerative braking configuration according to FIG. 9 may include a second power converter 1150. The second power converter 1150 may include a DC/DC converter that converts the DC voltage received from the DC link capacitor 60 into a DC voltage of a different level. The second power converter 1150 may convert the DC voltage of the DC link capacitor 60 into a different level of DC voltage based on an on-off operation of a second swtich 1154 and an energy storage function of a second inductor 1156. A processor (not illustrated) of the home appliance may control the second power converter 1150 to charge an energy storage device, for example, a super capacitor 65, with the DC voltage obtained by the second power converter 1150. Accordingly, the processor may control the second power converter 1150 such that the regenerative braking energy generated due to the deceleration or stoppage of the motor 1800 is stored in the energy storage device such as, for example, the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65. The certain voltage may be, for example, a voltage that is greater than the voltage between both ends of the DC link capacitor 60 by 3V or more. For example, given that the DC voltage established in the DC link capacitor 60 by the rectifier 1120_1 when there is no regenerative braking is 311V, the certain voltage may be 314V. Of course, this is an embodiment, and the certain voltage may be lower (e.g., 313V) or higher (e.g., 317V).

According to an embodiment of the disclosure, the second power converter 1150 may include a buck converter that reduces the received DC voltage. According to an embodiment of the disclosure, the second power converter 1150 may include a boost converter that increases the received DC voltage.

The processor of the home appliance including the regenerative braking configuration according to FIG. 9 may monitor the voltage of the DC link capacitor 60, and, when the voltage of the DC link capacitor 60 becomes equal to or greater than the certain voltage, may control the second switch 1154 of the second power converter 1150 to be turned on. In an example in which the second switch 1154 is turned on, the regenerative braking energy generated by the stoppage or deceleration of the motor 1800 may be collected in the super capacitor 65 by the second power converter 1150. According to an embodiment of the disclosure, the power stored in the super capacitor 65 may pass through the third power converter 1160 and may be consumed in the load 50. According to an embodiment of the disclosure, the super capacitor 65 may be replaced by the battery 67 capable of charging and discharging. According to an embodiment of the disclosure, the super capacitor 65, and the battery 67 capable of charging and discharging may be used as an energy storage device.

According to an embodiment of the disclosure, the processor of the home appliance turns on and off the second switch 1154 to operate the second power converter 1150 such that the regenerative braking energy may be stored in the super capacitor 65 by the second power converter 1150. Accordingly, power may be stored in the super capacitor 65. The second power converter 1150 according to FIG. 9 may not include an insulation transformer.

The home appliance may further include the third power converter 1160, which receives the DC voltage established in the super capacitor 65. The third power converter 1160 may include a third insulation transformer 1162 and a third switch 1164. According to an embodiment of the disclosure, the processor of the home appliance may control the on/off operation of the third switch 1164 to reduce the DC voltage established in the super capacitor 65 and provide the reduced DC voltage to the load 50. Power may be supplied to the load 50 operating according to a certain voltage level (e.g., 12V, 5V, or 3.3V) due to respective operations of the third insulation transformer 1162 and the third switch 1164 included in the third power converter 1160. Because examples of loads which may be included in the load 50 have been described herein in detail with reference to FIG. 6A, a description thereof will be omitted here.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 may function as a selector for selecting one from among the output of the first power converter 1140 and the output of the third power converter 1160 as an input to the load 50. In an example in which the output of the first power converter 1140 is maintained at 12.0V by the first diode 81 and the output of the third power converter 1160 is maintained at 12.2V by the second diode 82, a voltage on the side of the second diode 82, which outputs a slightly higher voltage than that on the side of the first diode 81 to the load 50, becomes a voltage used by the load 50. In an example in which the second power converter 1150 and/or the third power converter 1160 do not operate due to non-generation of regenerative braking energy, and thus the voltage on the side of the second diode 82 becomes less than 12.0V, the voltage of 12.0V transmitted from the first diode 81 becomes the voltage used in the load 50.

According to an embodiment of the disclosure, the second power converter 1150 and the third power converter 1160 may include a DC/DC converter.

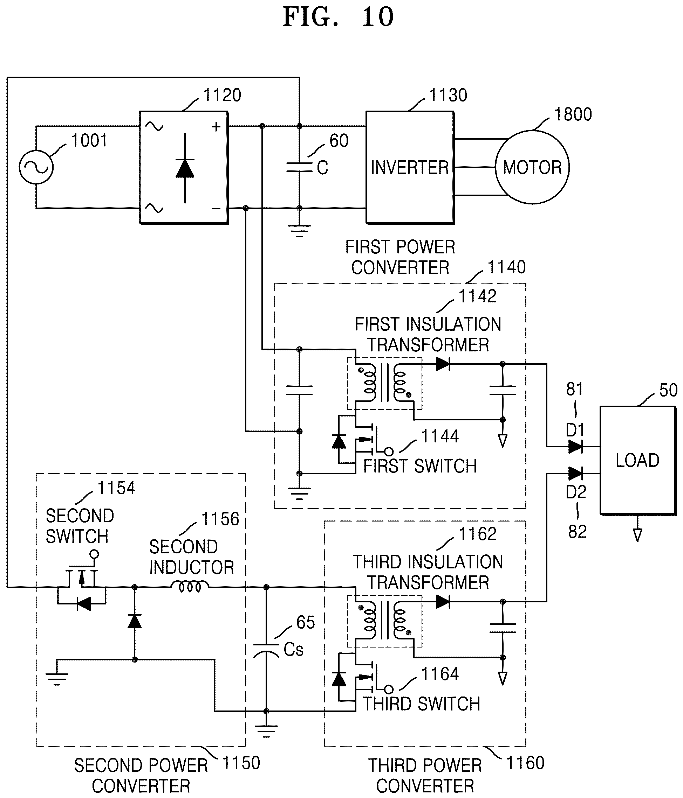

FIG. 10 is a diagram of a regenerative braking configuration during motor braking according to an embodiment of the disclosure.

In FIG. 10, a portion including an inverter 1130 for driving the motor 1800, a DC link capacitor 60, and a rectifier 1120 for supplying a DC voltage to the DC link capacitor 60 is a typical inverter configuration. In FIG. 10, as in FIG. 6A, the first power converter 1140 may be used to convert the DC voltage established in the DC link capacitor 60 into a DC voltage appropriate for and capable of driving the load 50. The load 50 may require a DC voltage having a signal level, such as, for example, 12V, 5V, or 3.3V. For example, the load 50 may be a load such as, for example, a PCB, a processor (microcomputer), a user interface, or a communication interface. According to an embodiment of the disclosure, 12V may be input to the load 50 by the first power converter 1140, and the PCB included in the load 50 may reduce 12V to 5V for internal use.

In FIG. 10, the first power converter 1140 according to an embodiment of the disclosure may share the DC voltage of the DC link capacitor 60 with the inverter 1130 without using a separate rectifier other than the rectifier 1120 for generating a DC voltage. The first power converter 1140 may include a first insulation transformer 1142 and a first switch 1144 for DC/DC conversion (DC voltage conversion). In FIG. 10, the first power converter 1140 is illustrated as using the first insulation transformer 1142. However, according to an embodiment of the disclosure, the first power converter 1140 may use a non-insulation converter. The first power converter 1140 may include an SMPS for supplying a DC voltage having a signal level to a home appliance.

The regenerative braking configuration according to FIG. 10 may include a second power converter 1150. The second power converter 1150 may include a DC/DC converter that converts the DC voltage received from the DC link capacitor 60 into a DC voltage of a different level. The second power converter 1150 may convert the DC voltage of the DC link capacitor 60 into a different level of DC voltage based on an on-off operation of a second swtich 1154 and an energy storage function of the second inductor1156. A processor (not illustrated) of the home appliance may control the second power converter 1150 to charge an energy storage device such as, for example, a super capacitor 65 with the DC voltage obtained by the second power converter 1150. Accordingly, the processor may allow the regenerative braking energy generated due to the deceleration or stoppage of the motor 1800 to be stored in the energy storage device such as, for example, the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65. The certain voltage may be, for example, a voltage that is greater than the voltage between both ends of the DC link capacitor 60 by 4V or more. For example, given that the DC voltage established in the DC link capacitor 60 by the rectifier 1120_1 when there is no regenerative braking is 311V, the certain voltage may be 315V. Of course, this is an embodiment, and the certain voltage may be lower (e.g., 314V) or higher (e.g., 318V).

According to an embodiment of the disclosure, the second power converter 1150 may include a buck converter that reduces the received DC voltage. According to an embodiment of the disclosure, the second power converter 1150 may include a boost converter that increases the received DC voltage.

The processor of the home appliance including the regenerative braking configuration according to FIG. 10 may monitor the voltage of the DC link capacitor 60, and, when the voltage of the DC link capacitor 60 becomes equal to or greater than the certain voltage, may control the second switch 1154 of the second power converter 1150 to be turned on. In an example in which the second switch 1154 is turned on, the regenerative braking energy generated by the stoppage or deceleration of the motor 1800 may be collected in the super capacitor 65 by the second power converter 1150. According to an embodiment of the disclosure, the power stored in the super capacitor 65 may pass through the third power converter 1160 and may be consumed in the load 50.

According to an embodiment of the disclosure, the processor of the home appliance may turn on and off the second switch 1154 such that the regenerative braking energy may be stored in the super capacitor 65 by the second power converter 1150. Accordingly, power may be stored in the super capacitor 65. The second power converter 1150 according to FIG. 10 may not include an insulation transformer.

The home appliance may further include the third power converter 1160, which receives the DC voltage established in the super capacitor 65. The third power converter 1160 may include a third insulation transformer 1162 and a third switch 1164. According to an embodiment of the disclosure, the processor of the home appliance may control the on/off operation of the third switch 1164 to reduce the DC voltage established in the super capacitor 65 and provide the reduced DC voltage to the load 50. Power may be supplied to the load 50 operating according to a certain voltage level (e.g., 12V, 5V, or 3.3V) due to respective operations of the third insulation transformer 1162 and the third switch 1164 included in the third power converter 1160. Because examples of loads which may be included in the load 50 have been described herein in detail with reference to FIG. 6A, a description thereof will be omitted here.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 may function as a selector for selecting one from among the output of the first power converter 1140 and the output of the third power converter 1160 as an input to the load 50. Because the first diode 81 and the second diode 82 have been described herein in detail, repeated descriptions thereof will be omitted.

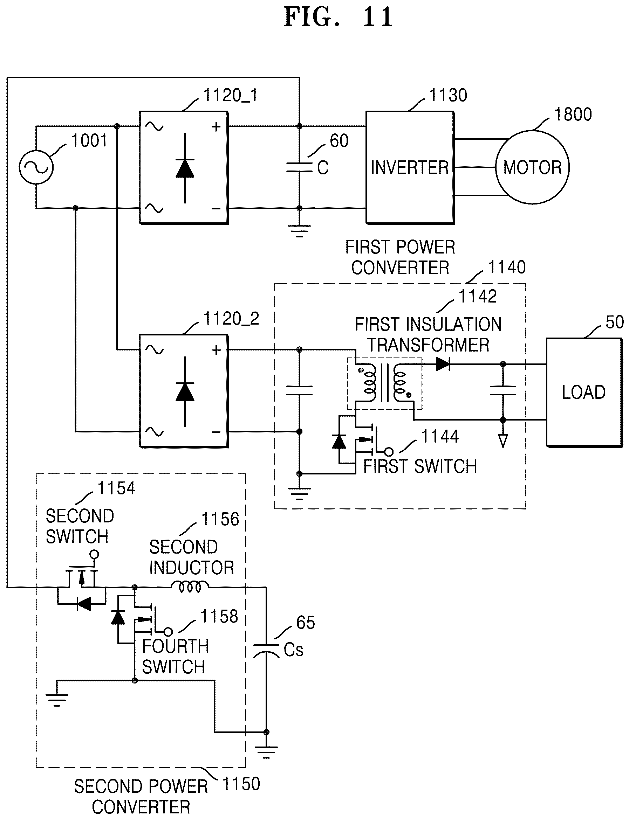

FIG. 11 is a diagram of a regenerative braking configuration during motor braking according to an embodiment of the disclosure.

In FIG. 11, a portion including an inverter 1130 for driving the motor 1800, a DC link capacitor 60, and a first rectifier 1120_1 for supplying a DC voltage to the DC link capacitor 60 is a typical inverter configuration. A first power converter 1140 may convert a DC voltage generated through a second rectifier 1120_2 into a DC voltage appropriate for and capable of driving the load 50. The load 50 may be a load that requires a signal level of DC voltage such as, for example, 12V, 5V, or 3.3V. Because the load 50 has been described herein in detail with reference to FIG. 6A, a description thereof will be omitted here.

In FIG. 11, the first power converter 1140 according to an embodiment of the disclosure may use a power branched from the input power supply 1001 by using the second rectifier 1120_2 separately from the first rectifier 1120_1 for generating a DC voltage established in the DC link capacitor 60. The first power converter 1140 may include a first insulation transformer 1142 and a first switch 1144 for DC/DC conversion (DC voltage conversion). According to an embodiment of the disclosure, the first power converter 1140 may use a non-insulation converter. The first power converter 1140 may include an SMPS for supplying a DC voltage having a signal level to a home appliance.

The regenerative braking configuration according to FIG. 11 may include a second power converter 1150, and a super capacitor 65 as an energy storage device. The second power converter 1150 may include a bidirectional buck-boost converter that converts a DC voltage received from the DC link capacitor 60 into a DC voltage of a different level and supplies the power stored in the super capacitor 65 back to the DC link capacitor 60. The second switch 1154 may function as a main switch that collects regenerative braking energy in the super capacitor 65. The processor (not illustrated) of the home appliance may control an on-off operation of the second switch 1154 of the second power converter 1150 to convert the DC voltage of the DC link capacitor 60 into a DC voltage of another level and store regenerative braking energy in the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65 through an energy storage function of the second inductor 1156. The certain voltage may be, for example, a voltage that is greater than the voltage between both ends of the DC link capacitor 60 by 4V or more. For example, given that the DC voltage established in the DC link capacitor 60 by the rectifier 1120_1 when there is no regenerative braking is 311V, the certain voltage may be 315V. Of course, this is an embodiment, and the certain voltage may be lower (e.g., 314V) or higher (e.g., 320V).

According to an embodiment of the disclosure, the second power converter 1150 may include a buck converter that reduces the received DC voltage.

The processor of the home appliance may monitor the voltage of the DC link capacitor 60 by using a DC link voltage sensor (not illustrated). The processor may control a fourth switch 1158 as a main switch such that the power stored in the super capacitor 65 may be used to restart the motor 1800, based on a restart event in which the motor 1800 accelerates again or resumes a rotational motion, thereby controlling the power stored in the super capacitor 65 to return to the DC link capacitor 60. Alternatively, the processor of the home appliance may control the fourth switch 1158 as a main switch according to a variation in the voltage of the DC link capacitor 60 while monitoring the voltage of the DC link capacitor 60, thereby controlling the power stored in the super capacitor 65 to return to the DC link capacitor 60. In this case, the second power converter 1150 may operate as a boost converter in a direction from the super capacitor 65 to the DC link capacitor 60.

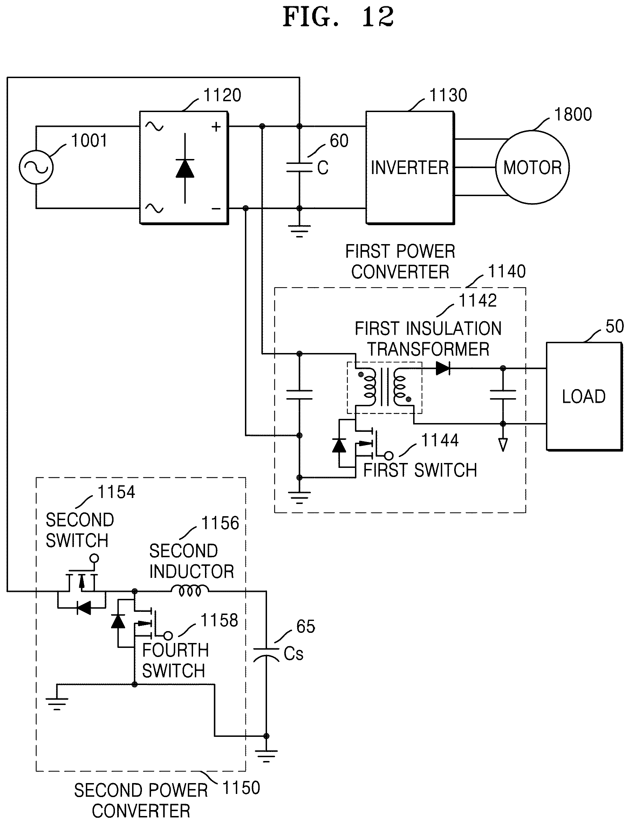

FIG. 12 is a diagram of a regenerative braking configuration during motor braking according to an embodiment of the disclosure.

In FIG. 12, a portion including an inverter 1130 for driving the motor 1800, a DC link capacitor 60, and a rectifier 1120 for supplying a DC voltage to the DC link capacitor 60 is a typical inverter configuration. In FIG. 12, a first power converter 1140 which receives the voltage of the DC link capacitor 60 may be used to convert the DC voltage established in the DC link capacitor 60 into a DC voltage appropriate for and capable of driving the load 50. The load 50 may be a load that requires a signal level of DC voltage such as, for example, 12V, 5V, or 3.3V. Because the load 50 has been described herein in detail with reference to FIG. 6A, a description thereof will be omitted here.

In FIG. 12, the first power converter 1140 according to an embodiment of the disclosure may include a first insulation transformer 1142 and a first switch 1144 for DC/DC conversion (DC voltage conversion). According to an embodiment of the disclosure, the first power converter 1140 may use a non-insulation converter. The first power converter 1140 may include an SMPS for supplying a DC voltage having a signal level to a home appliance.

The regenerative braking configuration according to FIG. 12 may include a second power converter 1150, and a super capacitor 65 as an energy storage device. The second power converter 1150 may include a bidirectional buck-boost converter that converts a DC voltage received from the DC link capacitor 60 into a DC voltage of a different level and supplies the power stored in the super capacitor 65 back to the DC link capacitor 60. The second switch 1154 may function as a main switch that collects regenerative braking energy in the super capacitor 65. The processor (not illustrated) of the home appliance may control an on-off operation of the second switch 1154 of the second power converter 1150 to convert the DC voltage of the DC link capacitor 60 into a DC voltage of another level through an energy storage function of the second inductor 1156 and store regenerative braking energy in the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65. The certain voltage may be, for example, a voltage that is greater than the voltage between both ends of the DC link capacitor 60 by 5V or more. For example, given that the DC voltage established in the DC link capacitor 60 by the rectifier 1120_1 when there is no regenerative braking is 311V, the certain voltage may be 316V. Of course, this is an embodiment, and the certain voltage may be lower (e.g., 314V) or higher (e.g., 320V).

According to an embodiment of the disclosure, the second power converter 1150 may include a buck converter that reduces the received DC voltage.

The processor of the home appliance may monitor the voltage of the DC link capacitor 60 by using a DC link voltage sensor (not illustrated). The processor may control a fourth switch 1158 as a main switch such that the power stored in the super capacitor 65 may be used to restart the motor 1800, based on a restart event in which the motor 1800 accelerates again or resumes a rotational motion, thereby controlling the power stored in the super capacitor 65 to return to the DC link capacitor 60. Alternatively, the processor of the home appliance may control the fourth switch 1158 as a main switch according to a variation in the voltage of the DC link capacitor 60 while monitoring the voltage of the DC link capacitor 60, thereby controlling the power stored in the super capacitor 65 to return to the DC link capacitor 60. In this case, the second power converter 1150 may operate as a boost converter in a direction from the super capacitor 65 to the DC link capacitor 60.

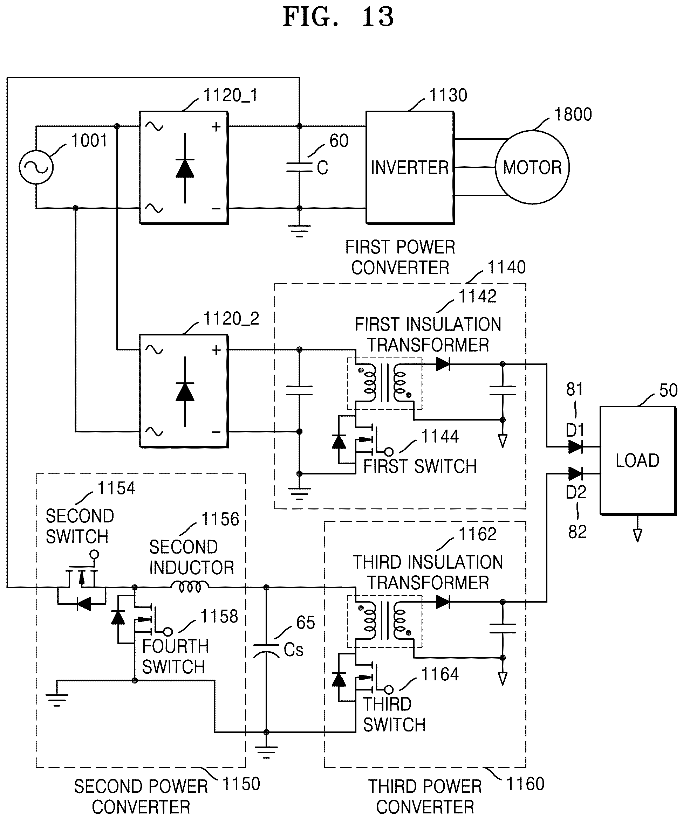

FIG. 13 is a diagram of a regenerative braking configuration during motor braking according to an embodiment of the disclosure.

In FIG. 13, a portion including an inverter 1130 for driving the motor 1800, a DC link capacitor 60, and a first rectifier 1120_1 for supplying a DC voltage to the DC link capacitor 60 is a typical inverter configuration. A first power converter 1140 may convert a DC voltage generated through a second rectifier 1120_2 into a DC voltage appropriate for and capable of driving the load 50. The load 50 may be a load requiring a DC voltage having a signal level, such as, for example, 12V, 5V, or 3.3V. For example, the load 50 may be a load such as, for example, a PCB, a processor (microcomputer), a user interface, or a communication interface. According to an embodiment of the disclosure, 12V may be input to the load 50 by the first power converter 1140, and the PCB included in the load 50 may reduce 12V to 5V by using a voltage regulator for internal use.

In FIG. 13, the first power converter 1140 according to an embodiment of the disclosure may use a power branched from the input power supply 1001 by using the second rectifier 1120_2 separately from the first rectifier 1120_1 for generating a DC voltage established in the DC link capacitor 60. The first power converter 1140 may include a first insulation transformer 1142 and a first switch 1144 for DC/DC conversion (DC voltage conversion). In FIG. 13, the first power converter 1140 is illustrated as using the first insulation transformer 1142. However, according to an embodiment of the disclosure, the first power converter 1140 may use a non-insulation converter. The first power converter 1140 may include an SMPS for supplying a DC voltage having a signal level to a home appliance.

The regenerative braking configuration according to FIG. 13 may include a second power converter 1150, and a super capacitor 65 as an energy storage device. The second power converter 1150 may include a bidirectional buck-boost converter that converts a DC voltage received from the DC link capacitor 60 into a DC voltage of a different level and supplies the power stored in the super capacitor 65 back to the DC link capacitor 60. The second switch 1154 may function as a main switch that collects regenerative braking energy in the super capacitor 65. The processor (not illustrated) of the home appliance may control an on-off operation of the second switch 1154 of the second power converter 1150 to change the DC voltage of the DC link capacitor 60 into a DC voltage of a different level through an energy storage function of the second inductor 1156 and store regenerative braking energy in the super capacitor 65. According to an embodiment of the disclosure, when a voltage between both ends of the DC link capacitor 60 becomes equal to or greater than a certain voltage due to the regenerative braking energy generated due to deceleration or stoppage of the motor 1800, the processor of the home appliance may control the second power converter 1150 to store the regenerative braking energy in the super capacitor 65. The certain voltage may be, for example, a voltage that is greater than the voltage across both ends of the DC link capacitor 60 by 3V or more. For example, given that the DC voltage established in the DC link capacitor 60 by the rectifier 1120_1 when there is no regenerative braking is 311V, the certain voltage may be 314V. Of course, this is an embodiment, and the certain voltage may be higher (e.g., 318V). According to an embodiment of the disclosure, the second power converter 1150 may include a buck converter that reduces the received DC voltage.

The processor of the home appliance may monitor the voltage of the DC link capacitor 60 by using a DC link voltage sensor (not illustrated). The processor may control a fourth switch 1158 as a main switch such that the power stored in the super capacitor 65 may be used to restart the motor 1800, based on a restart event in which the motor 1800 accelerates again or resumes a rotational motion, thereby controlling the power stored in the super capacitor 65 to return to the DC link capacitor 60. Alternatively, the processor of the home appliance may control the fourth switch 1158 as a main switch according to a variation in the voltage of the DC link capacitor 60 while monitoring the voltage of the DC link capacitor 60, thereby controlling the power stored in the super capacitor 65 to return to the DC link capacitor 60. In this case, the second power converter 1150 may operate as a boost converter in a direction from the super capacitor 65 to the DC link capacitor 60.

The home appliance may further include the third power converter 1160, which receives the DC voltage established in the super capacitor 65. The third power converter 1160 may include a third insulation transformer 1162 and a third switch 1164. According to an embodiment of the disclosure, the processor of the home appliance may control the on/off operation of the third switch 1164 to reduce the DC voltage established in the super capacitor 65 and provide the reduced DC voltage to the load 50. Power may be supplied to the load 50 operating according to a certain voltage level (e.g., 12V, 5V, or 3.3V) due to respective operations of the third insulation transformer 1162 and the third switch 1164 included in the third power converter 1160. Because examples of loads which may be included in the load 50 have been described herein in detail with reference to FIG. 6A, a description thereof will be omitted here.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 functioning as a selector for selecting one from among the output of the first power converter 1140 and the output of the third power converter 1160 as an input to the load 50 has already been described herein, and thus a detailed description thereof will be omitted. According to an embodiment of the disclosure, the third power converter 1160 may include a DC/DC converter, and the DC/DC converter may be a buck converter.

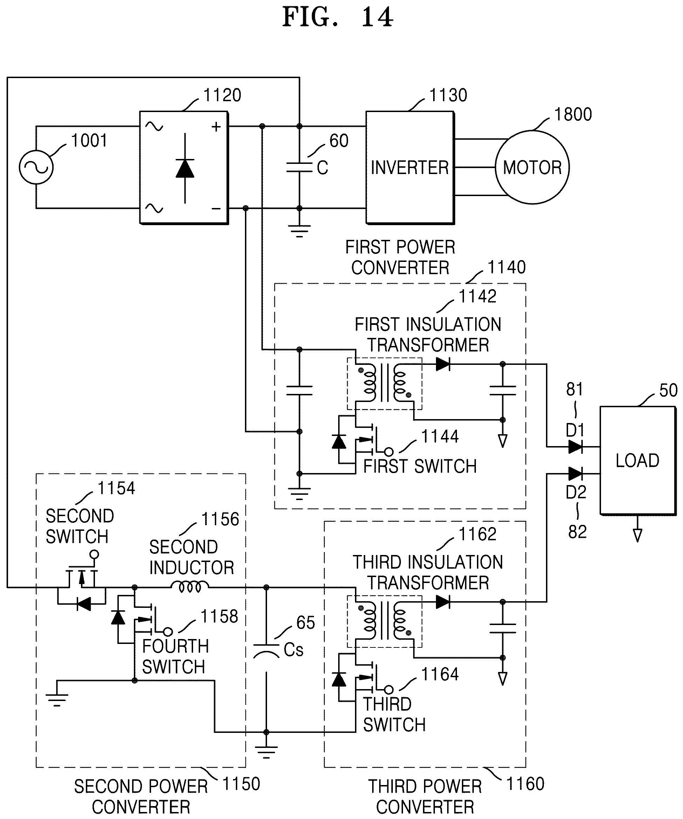

FIG. 14 is a diagram of a regenerative braking configuration during motor braking according to an embodiment of the disclosure.

**In** FIG. 14, a portion including an inverter 1130 for driving the motor 1800, a DC link capacitor 60, and a rectifier 1120 for supplying a DC voltage to the DC link capacitor 60 is a typical inverter configuration. The first power converter 1140 may include a first insulation transformer 1142 and a first switch 1144 for DC/DC conversion (DC voltage conversion). Because the load 50 has been described herein, a description thereof will be omitted here.

**In** FIG. 14, the first power converter 1140 according to an embodiment of the disclosure may share the DC voltage of the DC link capacitor 60 with the inverter 1130 without using a separate rectifier other than the rectifier 1120 for generating a DC voltage. The first power converter 1140 may include a first insulation transformer 1142 and a first switch 1144 for DC/DC conversion (DC voltage conversion). In FIG. 14, the first power converter 1140 is illustrated as using the first insulation transformer 1142. However, according to an embodiment of the disclosure, the first power converter 1140 may use a non-insulation converter. The first power converter 1140 may include an SMPS for supplying a DC voltage having a signal level to a home appliance.

The regenerative braking configuration according to FIG. 14 may include a second power converter 1150, and a super capacitor 65 as an energy storage device. Respective operations of the second power converter 1150 and the super capacitor 65 have been described herein in detail with reference to FIG. 13, so redundant descriptions thereof will be omitted.

The home appliance according to FIG. 14 may further include the third power converter 1160, which receives the DC voltage established in the super capacitor 65. The third power converter 1160 has been described herein in detail with reference to FIG. 13, so a redundant description thereof will be omitted. Power may be supplied to the load 50 operating according to a certain voltage level (e.g., 12V, 5V, or 3.3V) due to respective operations of the third insulation transformer 1162 and the third switch 1164 included in the third power converter 1160. Because examples of loads which may be included in the load 50 have been described herein in detail with reference to FIG. 6A, a description thereof will be omitted here.

According to an embodiment of the disclosure, an input terminal of the load 50 may be provided with a first diode 81 connected to an output of the first power converter 1140 and a second diode 82 connected to an output of the third power converter 1160. The first diode 81 and the second diode 82 functioning as a selector for selecting one from among the output of the first power converter 1140 and the output of the third power converter 1160 as an input to the load 50 has already been described herein, and thus a detailed description thereof will be omitted. According to an embodiment of the disclosure, the third power converter 1160 may include a DC/DC converter, and the DC/DC converter may be a buck converter.

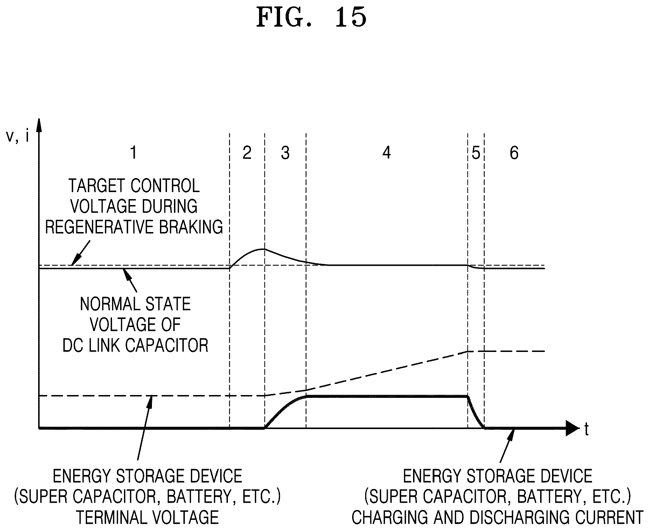

FIG. 15 is a graph illustrating variations in a voltage and a current for each stage of regenerative braking in the home appliance according to an embodiment of the disclosure.

In the home appliance that drives the motor 1800, a regenerative braking section may be divided into six sections. In FIG. 15, the six sections are marked by 1 through 6.

In section 1, regenerative braking by the motor 1800 does not occur and an inverter circuit of the home appliance operates normally. In section 1, the motor 1800 may be in an accelerating state or a constant speed state. The voltage of the DC link capacitor 60 is maintained in a normal state, and its voltage value is typically 311V.

In section 2, the motor 1800 decelerates and enters a regenerative braking state. As regenerative braking of the motor 1800 begins, the voltage of the DC link capacitor 60 increases. At this time, the inverter 1130 operates like a rectifier due to an anti-parallel diode included in each switch of the inverter 1130. According to an embodiment of the disclosure, the processor of the home appliance may monitor a voltage detected by the DC link voltage sensor that detects a voltage between both ends of the DC link capacitor 60.

In section 3, the processor of the home appliance may control a power converter to charge energy in the energy storage device when the voltage of the DC link capacitor 60 is equal to or greater than a certain voltage, for example, 311V + 3V = 314V. According to an embodiment of the disclosure, the certain voltage may be, for example, 314V, which is +3V more than 311V that is the certain voltage when the DC link capacitor 60 typically operates normally. However, this is merely an embodiment, and the certain voltage may be set to be higher (e.g., 318V) than 314V. During regenerative braking, a target control voltage (also referred to herein as a voltage command) across both ends of the DC link capacitor 60 may be equal to or less than the aforementioned certain voltage (314V) value.

The energy storage device may include the super capacitor 65. The energy storage device may include the battery 67 capable of charging and discharging. The power converter that is controlled to charge energy in the energy storage device may include at least one of the first power converter 1140, the second power converter 1150, or the third power converter 1160 of FIGS. 7 through 14. According to an embodiment of the disclosure, the first power converter 1140 may include an SMPS. According to an embodiment of the disclosure, the first power converter 1140 may be an SMPS that supplies power to the load 50 corresponding to a PCB, a processor, a user interface, or a communication interface. According to an embodiment of the disclosure, the second power converter 1150 may include a bidirectional buck-boost converter that is controlled to charge energy in the super capacitor 65 and return energy to the DC link capacitor 60. According to an embodiment of the disclosure, the third power converter 1160 may include a DC/DC converter that is controlled such that the power charged in the super capacitor 65 is consumed by the load 50.

According to an embodiment of the disclosure, when energy charging in the energy storage device including the super capacitor 65 or the battery 67 is initiated by the second power converter 1150 in section 3, a terminal voltage of the energy storage device increases, and a charging current of the energy storage device also increases. Because the energy of the DC link capacitor 60 moves to the energy storage device, the voltage of the DC link capacitor 60 may drop as illustrated in section 3. Alternatively, when the voltage of the DC link capacitor 60 reaches the certain voltage in section 3, the processor of the home appliance may control the power converter or other components of the home appliance such that the voltage of the DC link capacitor 60 is maintained to be the certain voltage in section 4.

As described herein in section 4, when the voltage across both ends of the DC link capacitor 60 reaches the certain voltage, the processor of the home appliance may control the voltage across both ends of the DC link capacitor 60 to maintain the certain voltage. At this time, a PI controller that receives the certain voltage and the voltage across both ends of the DC link capacitor 60 may be used for control. However, embodiments are not limited thereto, and a P controller or PID controller may also be used.

While the voltage across both ends of the DC link capacitor 60 is being controlled to maintain the certain voltage, the charging current charged in the energy storage device may maintain a certain constant current value as illustrated in FIG. 15. In other words, section 4 may be considered a constant current mode in which the charging current charged in the energy storage device is constant. According to an embodiment of the disclosure, an event of triggering an operation of moving regenerative braking energy to the energy storage device has been described as the voltage across both ends of the DC link capacitor 60 reaching the certain voltage and the voltage across both ends of the DC link capacitor 60 maintaining the certain voltage by an operation of the controller in section 4. However, in section 4, the voltage across both ends maintained by the DC link capacitor 60 may be slightly less than the certain voltage. In other words, when the certain voltage for the event of triggering the operation of moving the regenerative braking energy to the energy storage device is 311V + 3V = 314V, the predetermined voltage (a predetermined voltage command) at which the DC link capacitor 60 is maintained constant in section 4 may be 311V + 1.5V = 312.5V. Of course, this is merely an embodiment, and the predetermined voltage and the certain voltage command (target control voltage during regenerative braking) may be the same as each other.

In section 4, the voltage of the energy storage device continuously increases as a constant current is input.

In section 5, it may be seen that the energy stored in the DC link capacitor 60 is insufficient to charge the energy storage device and thus the charging current to the energy storage device decreases. In an example in which the charging current to the energy storage device decreases, the voltage of the energy storage device no longer rises and maintains a constant value, and the voltage of the DC link capacitor 60 may decrease to reach 311V, which is typically established by rectification of an input voltage.

In section 6, a motor is completely stopped or operated at a constant speed, and the energy storage device has been fully charged.

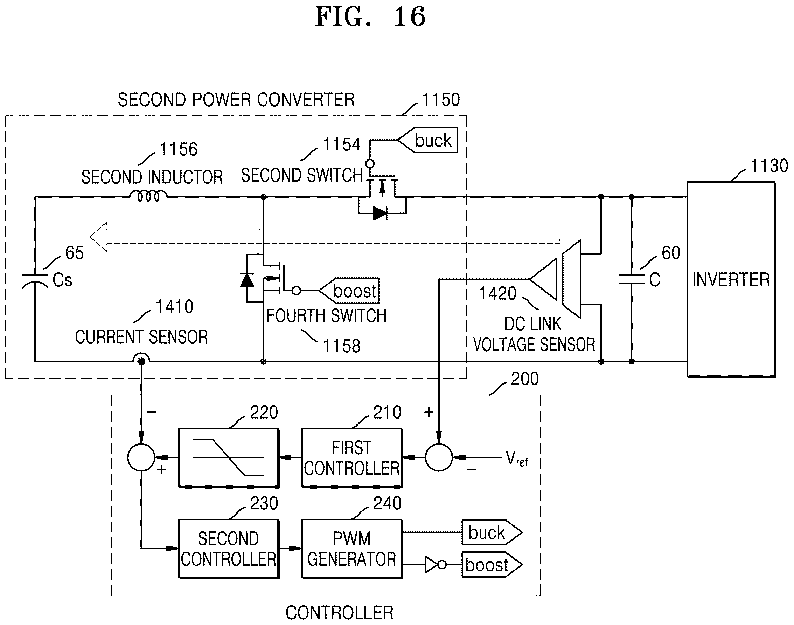

FIG. 16 is a diagram illustrating an operation of charging regenerative braking energy in an energy storage device through a controller's operation, according to an embodiment of the disclosure.

An operation of a controller 200 in FIG. 16 may be performed by a processor of a home appliance. The controller 200 senses the voltage of the DC link capacitor 60 by using a DC link voltage sensor 1420 and receives the voltage. The voltage of the DC link capacitor 60 is compared with a voltage command Vref and input to a first controller 210. Upper and lower limit values are applied to an output of the first controller 210 by an upper and lower limiter 220. A final output of the upper and lower limiter 220 may be considered a type of current command iref. The current command iref is subtracted from a current value flowing through the second power converter 1150, which is sensed by a current sensor 1410, and is input to a second controller 230.

An output of the second controller 230 becomes an input of a pulse width modulation (PWM) generator 240, and the PWM generator 240 may determine whether to perform buck conversion through the second switch 1154 (i.e., buck conversion from the DC link capacitor 60 to the super capacitor 65, which is an energy storage device) or perform boost conversion through the fourth switch 1158 (i.e., boost conversion from the super capacitor 65 to the DC link capacitor 60), and may output a gate signal to the second switch 1154 or the fourth switch 1158. In FIG. 16, regenerative braking occurs and thus the voltage of the DC link capacitor 60 increases, and an embodiment of the disclosure support transferring energy (e.g., energy generated due to the regenerative braking) from the DC link capacitor 60 to the super capacitor 65, which is an energy storage device. Accordingly, the gate signal may be output to the second switch 1154. A buck signal and a boost signal are PWM gate signals that are finally input to the second switch 1154 and the fourth switch 1158, respectively, according to results of the first controller 210 and the second controller 230.

The first controller 210 and the second controller 230 may be PI controllers. However, embodiments of the disclosure are not limited thereto, and a P controller, a PID controller, or a PR controller may be used. The first controller 210 may be considered a voltage controller, and the second controller 230 may be considered a current controller. The first controller 210 and the second controller 230 may be composed of analog circuits or may be composed of digital circuits.

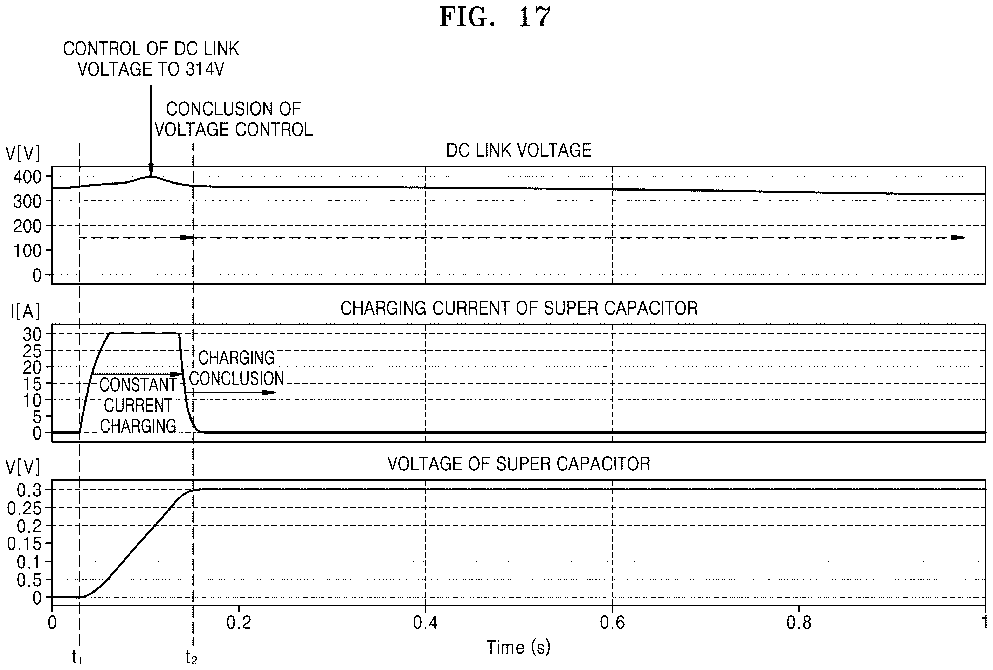

FIG. 17 illustrates graphs illustrating a voltage and a current during regenerative braking according to an embodiment of the disclosure.

Referring to FIG. 17, voltage control of the DC link capacitor 60 according to regenerative braking begins at a time point $t_1$. In other words, because the voltage of the DC link capacitor 60 becomes greater than the certain voltage at the time point $t_1$, the home appliance starts controlling the voltage of the DC link capacitor 60. At this time, a current begins to be charged in the super capacitor 65, and after a predetermined time, the charging mode enters a constant current mode in which the charging current is constant. The voltage of the super capacitor 65 rises at a constant slope because the charging current is charged with a constant value. In an example in which regenerative braking energy is no longer generated due to the motor 1800 stopping or operating at a constant speed at a time point $t_2$ in FIG. 17, the voltage of the DC link capacitor 60 is stabilized, and thus the voltage control of the DC link capacitor 60 is terminated. In an example in which the voltage control of the DC link capacitor 60 ends, charging of the super capacitor 65 also ends, so the charging current becomes 0 and the voltage of the super capacitor 65 is maintained at a constant value.

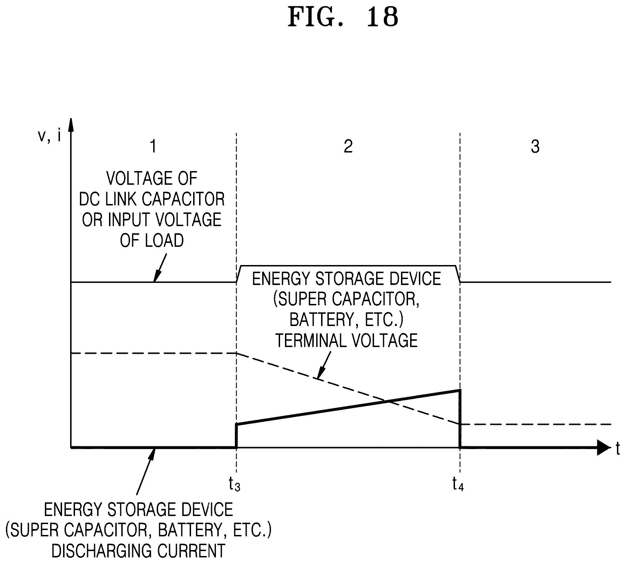

FIG. 18 is a graph illustrating a voltage and a current during discharge in an energy storage device according to an embodiment of the disclosure.

FIG. 18 illustrates an input voltage of the DC link capacitor 60 or the load 50, the voltage of the energy storage device, and the discharge current of the energy storage device when the energy storage device is discharged to the DC link capacitor 60.

The discharge of the energy storage device may supply energy to the load 50 of the home appliance or may supply energy to the DC link capacitor 60. **In** an example in which the energy storage device supplies energy, the processor of the home appliance may control the voltage of the energy storage device slightly greater than the voltage (311V) of the DC link capacitor 60 or the voltage of the load 50 (e.g., 12V or 5V) within a range not exceeding the rating of the energy storage device through voltage control. The discharge current discharged from the energy storage device may be automatically determined based on the magnitude of the load 50, and may be controlled so as not to exceed the current rating of the energy storage device.

A section from 0 to $t_3$ in FIG. 18 is a normal operating state, in which no discharge occurs in the energy storage device and the voltage of the energy storage device is maintained constant.

**In** a section from $t_3$ to $t_4$ in FIG. 18, in the regenerative braking configuration diagram according to FIGS. 7, 8, 9, and 10, where the third power converter 1160 is provided at a rear end of the energy storage device, the third power converter 1160 operates to discharge the energy storage device. At this time, the processor of the home appliance controls the third power converter 1160 such that the magnitude of the voltage output by the third power converter 1160 is slightly greater than the output voltage of the first power converter 1140. At this time, the processor controls a maximum value of the voltage output from the third power converter 1160 not to exceed the rated voltage of the load 50. In this case, when the energy storage capacity of the load 50 or the energy storage device is small and thus the terminal voltage of the energy storage device decreases significantly, the discharge current of the energy storage device increases, or, when the energy storage capacity of the load 50 or the energy storage device is large and thus the terminal voltage of the energy storage device is constant, the discharge current of the energy storage device is almost constant.

In the regenerative braking configuration diagram according to FIGS. 13 and 14, the second power converter 1150 in addition to the third power converter 1160 may operate as a boost converter in a direction toward the DC link capacitor 60. In the regenerative braking configuration diagram according to FIGS. 11 and 12, because the third power converter 1160 is not included, the second power converter 1150 may operate as a boost converter in a direction toward the DC link capacitor 60 when the energy storage device is discharged. At this time, the second power converter 1150 may be controlled such that the output voltage of the energy storage device is output as a voltage greater than a peak voltage of the input power supply 1001. In an example in which the diode in the rectifier 1120 is a voltage doubler, the second power converter 1150 may be controlled such that the output voltage of the energy storage device is output as a voltage greater than double of the peak voltage of the input power supply 1001. In an example in which the input voltage of the input power supply 1001 is 220V (rms) and the rectifier 1120 is a general rectifier, the peak voltage of the input power supply 1001 is 311V. Accordingly, the processor of the home appliance may control the second power converter 1150 to control the output voltage of the energy storage device to 320V, which is slightly greater than 311V. As in North America, when the input voltage of the input power supply 1001 is 120V (rms), a voltage doubler may be applied to the rectifier 1120. At this time, the processor of the home appliance may control the second power converter 1150 such that the output voltage of the energy storage device becomes a voltage (345V) slightly greater than 339V, which is twice the peak voltage of 120V (rms). Because there is the rectifier 1120 including a diode between the input power supply 1001 and the DC link capacitor 60, the input voltage of the input power supply 1001 is automatically blocked when the voltage across both ends of the DC link capacitor 60 is greater than the voltage of the input power supply 1001.

A section from $t_3$ to $t_4$ illustrates a normal operation state after discharge has ended in the energy storage device. At this time, the voltage across both ends of the DC link capacitor 60 is maintained as a normal voltage (311V), and the discharge current from the energy storage device no longer flows.

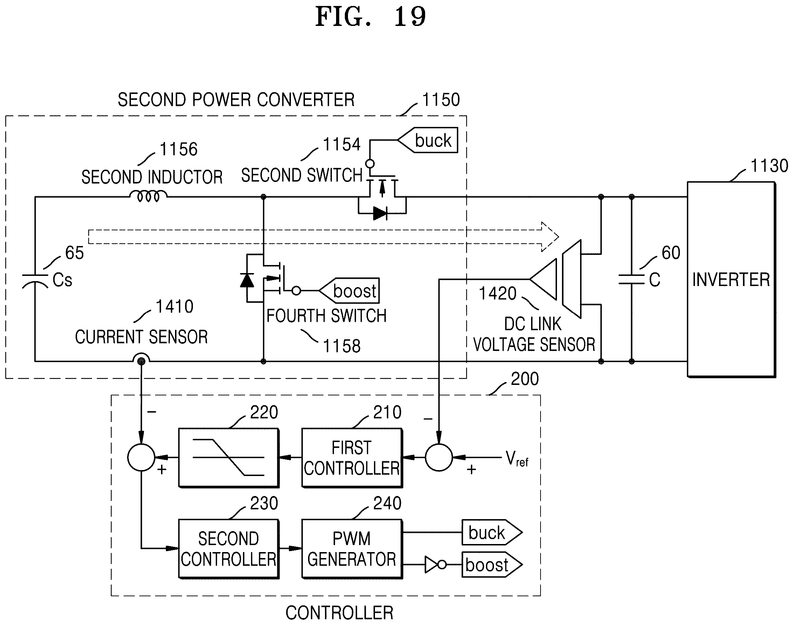

FIG. 19 is a graph illustrating an operation of discharging from an energy storage device to a DC link capacitor, according to an embodiment of the disclosure.

FIG. 16 illustrates a path in which the processor of the home appliance controls the controller 200 to charge the energy generated by regenerative braking from the DC link capacitor 60 to the energy storage device, whereas FIG. 19 illustrates a path in which, while the regenerative braking energy is no longer generated, energy is discharged from the energy storage device to the DC link capacitor 60.

An operation of the controller 200 in FIG. 19 may be performed by the processor of the home appliance. The controller 200 senses the voltage of the DC link capacitor 60 by using a DC link voltage sensor 1420 and receives the voltage. The voltage of the DC link capacitor 60 is compared with a voltage command Vref and input to the first controller 210. Upper and lower limit values are applied to an output of the first controller 210 by the upper and lower limiter 220. The final output of the upper and lower limiter 220 may be considered a type of current command iref. The current command iref is subtracted from a current value flowing through the second power converter 1150, which is sensed by a current sensor 1410, and is input to the second controller 230. The output of the second controller 230 becomes the input of the PWM generator 240, and the PWM generator 240 may determine whether to perform buck conversion through the second switch 1154 (i.e., buck conversion from the DC link capacitor 60 to the super capacitor 65, which is an energy storage device) or perform boost conversion through the fourth switch 1158 (i.e., boost conversion from the super capacitor 65 to the DC link capacitor 60), and may output a gate signal to the second switch 1154 or the fourth switch 1158. In FIG. 19, because discharge occurs in the energy storage device as illustrated in FIG. 18, the processor controls the switching of the fourth switch 1158 to return the energy of the energy storage device to the DC link capacitor 60. In FIG. 19, a buck signal and a boost signal are PWM gate signals that are finally input to the second switch 1154 and the fourth switch 1158, respectively, according to results of the first controller 210 and the second controller 230. In FIG. 19, the PWM gate signal is output as a boost signal by the PWM generator 240, and thus the fourth switch 1158 operates and the voltage of the energy storage device is boosted and converted to the DC link capacitor 60.

The first controller 210 and the second controller 230 may be PI controllers. However, embodiments of the disclosure are not limited thereto, and a P controller, a PID controller, or a PR controller may be used. The first controller 210 may be considered a voltage controller, and the second controller 230 may be considered a current controller. The first controller 210 and the second controller 230 may be composed of analog circuits or may be composed of digital circuits.

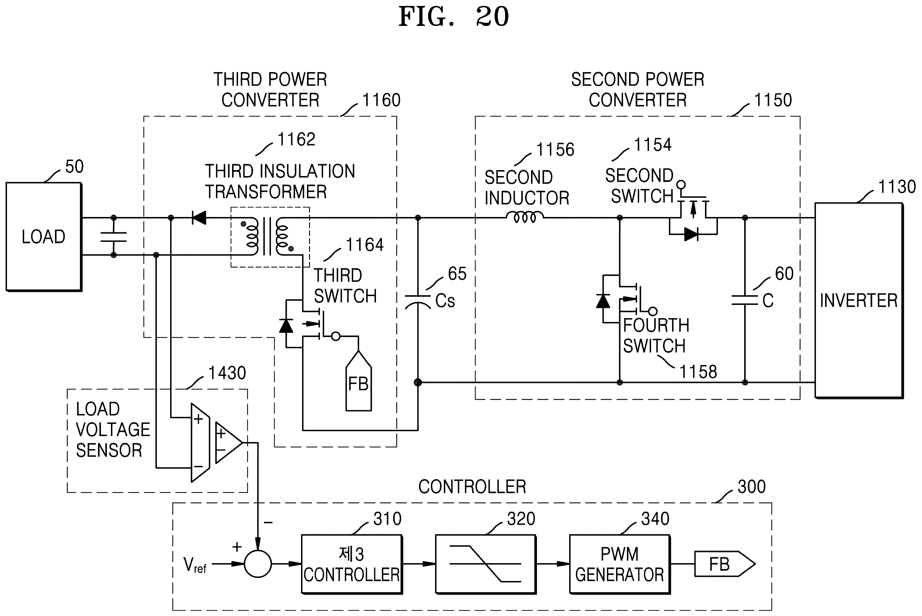

FIG. 20 is a diagram illustrating an operation of discharging from an energy storage device to a load, according to an embodiment of the disclosure.

FIG. 19 illustrates a path in which, while the regenerative braking energy is not generated, energy is discharged from the energy storage device to the DC link capacitor 60, whereas FIG. 20 illustrates a path in which, while the regenerative braking energy is not generated, energy is discharged from the energy storage device to the load 50.

An operation of a controller 300 in FIG. 20 may be performed by a processor of a home appliance. The controller 300 senses the voltage of the load 50 by using a load voltage sensor 1430. The load voltage sensor 1430 may be an insulation voltage sensor that is insulated from a load side ground. The voltage of the load 50 is compared with the voltage command Vref and input to a third controller 310. Upper and lower limit values are applied to an output of the third controller 310 by an upper and lower limiter 320. A final output of the upper and lower limiter 320 becomes an input of the PWM generator 340, and the PWM generator 340 may perform buck-conversion by transmitting a gate signal to the third switch 1164, thereby performing buck conversion from the super capacitor 65, which is the energy storage device, to the load 50. The processor of the home appliance may control the controller 300 to transmit a gate signal (PWM gate signal) to the third switch 1164 through the PWM generator 340.

The third controller 310 may be PI controllers. However, embodiments of the disclosure are not limited thereto, and a P controller, a PID controller, or a PR controller may be used. The third controller 310 may be considered a voltage controller, and may be composed of analog circuits or digital circuits.

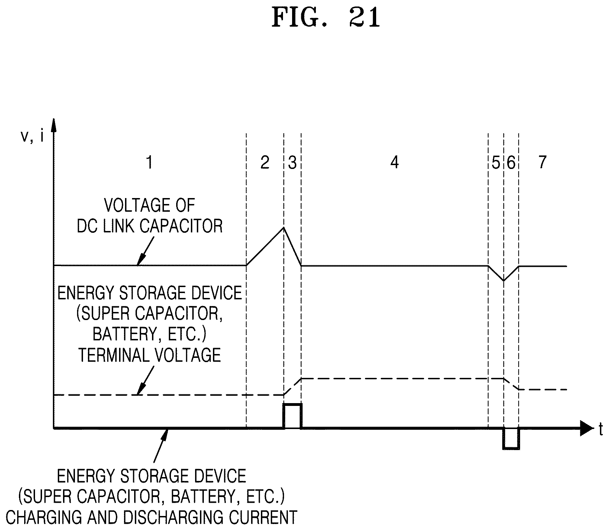

FIG. 21 is a graph illustrating a DC link capacitor voltage stabilization sequence according to an embodiment of the disclosure.

In a home appliance such as, for example, a washing machine, an inverter configuration that drives the motor 1800 converts an AC input voltage to a DC voltage by using the rectifier 1120, smoothes the DC voltage by using the DC link capacitor 60, and converts the smoothed DC voltage to AC voltage by using the inverter 1130, thereby driving the motor 1800. The DC link capacitor 60 may reduce the ripple of the DC voltage obtained by the rectifier 1120, and may maintain power to some extent even during an instantaneous power outage due to the characteristics of a capacitor. However, when a system power supply that supplies the input power supply 1001 is unstable due to, for example, an instantaneous surge voltage or load change, the voltage of the DC link capacitor 60 may increase. In this case, stress may occur due to the increased voltage in the DC link capacitor 60 and the elements connected to the DC link capacitor 60.

In the related art, a method of suppressing the amount of voltage increase by increasing the capacitance of the DC link capacitor 60 or a method of forcibly cutting off the power connected to the DC link capacitor 60 when the voltage of the DC link capacitor 60 exceeds a certain voltage was used. However, in the former case, the method of the related art includes increasing capacitor size, and the unit price of the capacitor increases. In the latter case, the continuity of a home appliance operation is interrupted. Therefore, these problems may be addressed by charging and discharging the energy storage device by using the regenerative braking configuration illustrated in FIGS. 7 through 14 according to an embodiment of the disclosure. A diagram illustrating charging and discharging of this energy storage device is FIG. 21.

Referring to FIG. 21, the charging and discharging operation of the energy storage device may be divided into seven sections. Section 1 illustrates a normal state in which the voltage across both ends of the DC link capacitor 60 does not increase and the motor 1800 is driven.

In section 2, the voltage across both ends of the DC link capacitor 60 increases due to an abnormality in a system to which the home appliance is connected or an instantaneous change in a load. For example, due to generation of a back electromotive force due to stoppage of the motor 1800, regenerative braking energy according to the back electromotive force may be transmitted to the DC link capacitor 60, such that the voltage of the DC link capacitor 60 may increase.

In section 3, when the voltage across both ends of the DC link capacitor 60 is equal to or greater than the certain voltage, the processor of the home appliance that monitors the voltage across both ends of the DC link capacitor 60 may set this as a triggering event and control a power converter to charge the increased energy of the DC link capacitor 60 in the energy storage device. As described herein with reference to FIGS. 7 through 14, the power converter may include the second power converter 1150. In section 3, charging occurs in the energy storage device, so the voltage of the energy storage device increases and the charging mode becomes a constant current mode where the charging current to the energy storage device has a constant value. At this time, the voltage across both ends of the DC link capacitor 60 falls to maintain the typical voltage value established and rectified by the rectifier 1120 or maintain a certain voltage slightly higher than the typical voltage value.

In section 4, the voltage across both ends of the DC link capacitor 60 reaches a stable state where the voltage across both ends of the DC link capacitor 60 maintains a certain voltage value, charging of the energy storage device is stopped, and the energy storage device maintains a certain voltage value.

In section 5, the voltage across both ends of the DC link capacitor 60 decreases due to any abnormality in the load of the home appliance itself or in the system to which the home appliance is connected. For example, there may be a case where the energy demand of the load 50 connected to the home appliance increases or the input power supply 1001 is unable to supply power to the home appliance due to an instantaneous power blackout in the system.

In section 6, when the voltage across both ends of the DC link capacitor 60 becomes less than a second certain voltage different from the previous certain voltage, the processor may control the second power converter 1150 to transfer the energy of the energy storage device back to the DC link capacitor 60 such that the voltage of the DC link capacitor 60 may rise again to recover the voltage value obtained by the typical rectifier 1120. The second certain voltage may be, for example, 308V (311V-3V). At this time, a discharge current (i.e., a (-) current from the energy storage device's perspective) flows from the energy storage device to the DC link capacitor 60, and the voltage of the energy storage device decreases.

In section 7, when the DC link capacitor 60 reaches the voltage value obtained by the typical rectifier 1120, the processor of the home appliance may control the second power converter 1150 to stop discharging from the energy storage device. The energy storage device and the DC link capacitor 60 are able to maintain a constant voltage again in section 7.

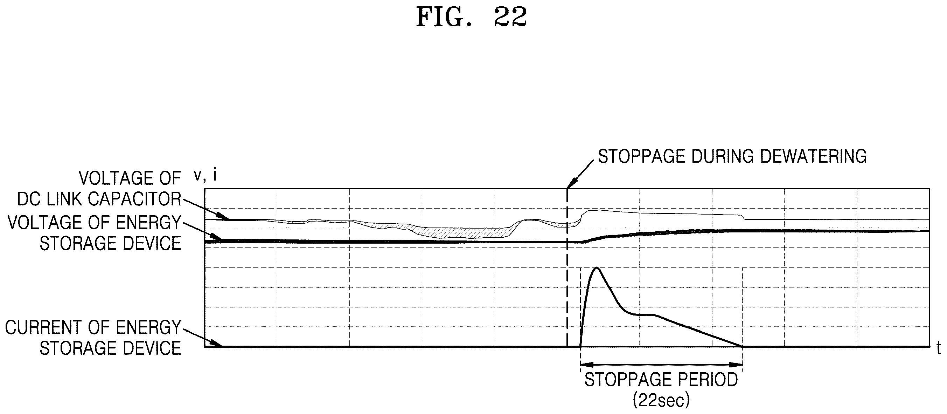

FIG. 22 is a waveform diagram of a dewatering mode of a washing machine according to an embodiment of the disclosure.

As a home appliance, a washing machine has a washing mode and a dewatering mode. In the washing mode, a rotation direction change of the motor 1800 and stoppage of the rotation are relatively frequent. In some examples, in the dewatering mode, the number of stoppages of the motor 1800 is relatively small, but the laundry is wet. Thus, inertia is high, and a rotational force of the motor 1800 in association with the dewatering mode may be greater than a rotational force of the motor 1800 in association with the washing mode.

According to FIG. 22, it may be seen that the voltage of the DC link capacitor 60 increases at the moment when the motor 1800 stops while the washing machine is performing dewatering. At this time, the charging current to the energy storage device increases. It may be seen that the charging current continuously flow to the energy storage device during a stoppage period (e.g., about 22 seconds in FIG. 22) and the voltage of the energy storage device continuously rise during the stoppage period. According to an embodiment, the charging current to the energy storage device may be subject to a current limit (for example, 20 [A]), and this may affect the length of the stoppage period. For example, the larger the current limit is, the shorter the stopping period may be.

The terms "about" or "approximately" as used herein are inclusive of the stated value and include a suitable range of deviation for the particular value as determined by one of ordinary skill in the art, considering the measurement in question and the error associated with measurement of the particular quantity. The term "about" can mean within one or more standard deviations, or within ± 30%, 20%, 10%, 5% of the stated value, for example.

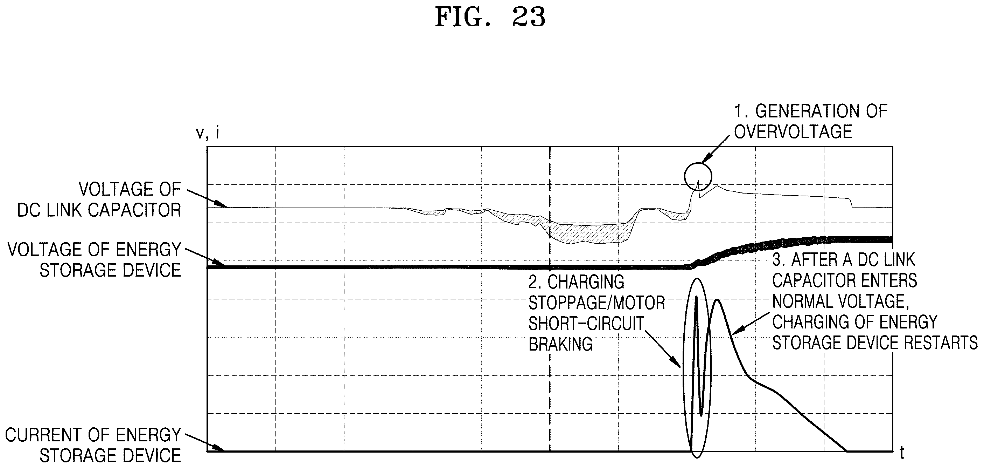

FIG. 23 is a waveform diagram when an overvoltage is generated during motor stoppage, according to an embodiment of the disclosure.

Referring to FIG. 23, the voltage across both ends of the DC link capacitor 60 may rapidly increase within a short period of time for a reason such as, for example, a sudden stoppage of the motor 1800, resulting in an overvoltage. In this case, a fourth certain voltage determined to be an overvoltage may vary based on a withstand voltage level (for example, 450V) of the DC link capacitor 60, but may be set to be 400V. Of course, this is just an example, and, even at the same withstand voltage level of the DC link capacitor 60, a voltage that is determined to be overvoltage may be lowered or increased for safety reasons.

In FIG. 23, when the voltage of the DC link capacitor 60 momentarily becomes 400V, which is the fourth certain voltage, it may be difficult for the energy storage device to instantaneously store all the energy due to the overvoltage that momentarily occurs in the DC link capacitor 60. Accordingly, when the voltage across both ends of the DC link capacitor 60 reaches a certain voltage (fourth certain voltage) that is determined to be overvoltage, the processor of the home appliance may control the switches of the inverter 1130 while controlling the second power converter 1150 such that the charging current flows to the energy storage device, thereby performing short-circuit braking as illustrated in FIG. 2C. After the voltage across both ends of the DC link capacitor 60 is prevented from spontaneously and rapidly rising through such short-circuit braking, the processor of the home appliance may control the second power converter 1150 to store the regenerative braking energy of the DC link capacitor 60 in the energy storage device.

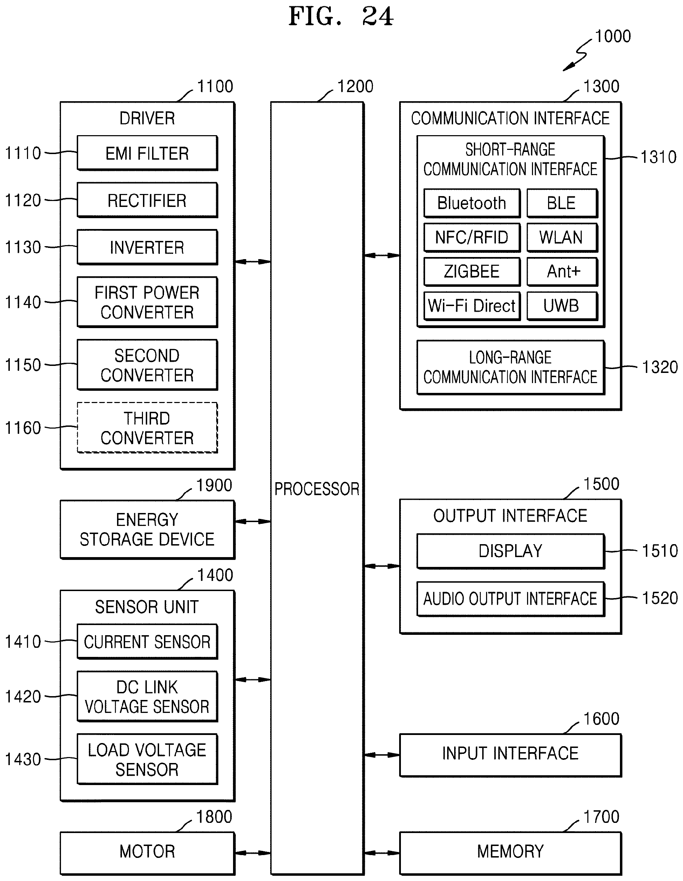

FIG. 24 is a block diagram of a home appliance according to an embodiment of the disclosure.

A home appliance 1000 according to the block diagram of FIG. 24 may include the regenerative braking configuration according to FIGS. 7 through 14 and FIG. 16. The home appliance 1000 according to the block diagram of FIG. 24 may include a discharging configuration according to FIGS. 19 and 20. The home appliance 1000 according to the block diagram of FIG. 24 may also include the washing machine 1 of FIG. 1.

Referring to FIG. 24, the home appliance 1000 according to an embodiment of the disclosure may include a driver 1100, a processor 1200, a communication interface 1300, a sensor unit 1400, an output interface 1500, an input interface 1600, a memory 1700, a motor 1800, and an energy storage device 1900. Not all of the components of the home appliance 1000 are essential, and each of the components may be added or subtracted according to a manufacturer's design philosophy.

The aforementioned components will now be described in order.

The driver 1100 may receive power from an external source, and may supply a current to the load 50 according to a driving control signal of the processor 1200. The driver 1100 may include, but is not limited to, an electro-magnetic interference (EMI) filter 1110, a rectifier 1120, an inverter 1130, a first power converter 1140, a second power converter 1150, and a third power converter 1160. The third power converter 1160 may or may not be included in the home appliance 1000 according to the regenerative braking configuration of the home appliance 1000.

The EMI filter 1110 may block high-frequency noise included in an AC voltage supplied from the input power supply 1001, and may transmit an AC voltage and an AC current of a predetermined frequency (e.g., 50 Hz or 60 Hz). A fuse and a relay may be provided between the EMI filter 1110 and the input power supply 1001 in order to block overcurrent. AC power of which high-frequency noise has been blocked by the EMI filter 1110 is supplied to the rectifier 1120.

The rectifier 1120 may convert the AC voltage into a DC voltage. For example, the rectifier 1120 may convert an AC voltage with a magnitude and a polarity (positive voltage or negative voltage) that change over time into a DC voltage with a magnitude and a polarity that are constant, and may convert an AC current with a magnitude and a polarity (positive current or negative current) that change over time into a DC current having a constant magnitude. The rectifier 1120 may include a bridge diode. For example, the rectifier 1120 may include four diodes. The bridge diode may convert an AC voltage with a polarity that changes over time into a positive voltage with polarity that is constant, and may convert an AC current with a direction that changes over time into a positive current (DC current) with a direction that is constant. According to an embodiment of the disclosure, the rectifier 1120 may include two diodes and two thyristors. One thyristor and one diode may form one rectifying leg, and another thyristor and another diode may form another rectifying leg. However, this is a case where the input power supply 1001 is of a single-phase type. In an example in which the input power supply 1001 is of a 3-phase type, a rectifier 1120 including three legs with three thyristors and three diodes may be formed. The processor 1200 may control the thyristor such that a voltage charged in the DC link capacitor 60 increases gradually rather than suddenly.

The inverter 1130 may control a current that is supplied to the motor 1800. For example, the magnitude of the current flowing in the motor 1800 may change according to turn on/off operations of the switches included in the inverter 1130. **In** this case, an AC current may be supplied to the motor 1800.

The first power converter 1140 may be, but is not limited to, a DC/DC converter that mainly converts a high voltage to a low voltage. According to an embodiment of the disclosure, the first power converter 1140 may be an SMPS that receives the voltage across both ends of the DC link capacitor 60 as an input and supplies a DC voltage appropriate for and capable of driving the load 50. According to an embodiment of the disclosure, the first power converter 1140 may be an SMPS that does not receive the voltage associated with both ends of the DC link capacitor 60 as an input but receives the DC voltage generated by the second rectifier 1120_2 as an input and supplies the DC voltage required by the load 50 by being connected to the second rectifier 1120_2, which is a separate rectifier from the rectifier 1120 connected to the input power supply 1001. The first power converter 1140 may include the first switch 1144 for converting a voltage. The first power converter 1140 may include, but is not limited to, the first insulation transformer 1142 to insulate a generated low voltage from an input power supply's side.

The second power converter 1150 may be a DC/DC converter that receives the voltage associated with both ends of the DC link capacitor 60 as an input to change a voltage level to store energy in the energy storage device 1900.

According to an embodiment of the disclosure, the second power converter 1150 may be a buck converter capable of reducing a high voltage across both ends of the DC link capacitor 60 to match the voltage level (e.g., 30V) of the energy storage device 1900. According to an embodiment of the disclosure, the second power converter 1150 may be a bidirectional buck-boost converter capable of also boosting the low voltage of the energy storage device 1900 to match the voltage level (e.g., 311V) of the DC link capacitor 60 in order to return the energy of the energy storage device 1900 to the DC link capacitor 60, while performing the above-described function of the buck converter. According to an embodiment of the disclosure, the second power converter 1150 may include the second switch 1154 for functioning as a buck converter. According to an embodiment of the disclosure, the second power converter 1150 may further include the fourth switch 1158 and the second inductor 1156 in order to function as a boost converter. According to an embodiment of the disclosure, the second power converter 1150 may further include the second insulation transformer 1152 to insulate the DC link capacitor 60 or the input power supply 1001 from the energy storage device 1900.

The third power converter 1160 may be a DC/DC converter that converts a voltage level to supply the energy of the energy storage device 1900 to the load 50. According to an embodiment of the disclosure, the third power converter 1160 may be, but is not limited to, a buck converter that converts the voltage level of the energy storage device 1900 to a lower voltage level (e.g., 3.3V, 5V, or 12V). According to an embodiment of the disclosure, the third power converter 1160 may include the third switch 1164 for performing a voltage level conversion function. According to an embodiment of the disclosure, the third power converter 1160 may include the third insulation transformer 1162 to insulate the DC link capacitor 1900' side from the load 50' side.

The processor 1200 may control overall operations of the home appliance 1000. The processor 1200 may control the driver 1100, the communication interface 1300, the sensor unit 1400, the output interface 1500, the input interface 1600, and the memory 1700 by executing programs stored in the memory 1700.

According to an embodiment of the disclosure, the processor 1200 may be equipped with an artificial intelligence (AI) processor. The AI processor may be manufactured in the form of an exclusive hardware chip for AI, or may be manufactured as a part of an existing general-purpose processor (for example, a CPU or an AP) or a graphic-exclusive processor (for example, a GPU) and may be mounted on the home appliance 1000.

According to an embodiment of the disclosure, the processor 1200 may perform controller operations of the first controller 210, the second controller 230, and the PWM generator 240 included in the controller 200 of the home appliance 1000.

The processor 1200 may include the communication interface 1300 to operate on an Internet of Things (IoT) network or operate in a home network, as needed.

The communication interface 1300 may include a short-range communication interface 1310 and a long-range communication interface 1320. Examples of the short-range communication interface 1310 may include, but are not limited to, a Bluetooth communication interface, a Bluetooth Low Energy (BLE) communication interface, a near field communication (NFC) interface, a Wi-Fi communication interface, a ZigBee communication interface, an infrared Data Association (IrDA) communication interface, a Wi-Fi direct (WFD) communication interface, an ultra-wideband (UWB) communication interface, and an Ant+ communication interface. The long-range communication interface 1320 may exchange a wireless signal with at least one selected from a base station, an external terminal, and a server on a mobile communication network. Here, examples of the wireless signal may include a voice call signal, a video call signal, and various types of data according to text/multimedia message exchange. The long-range communication interface 1320 may include, but is not limited to, a 3G module, a 4G module, a 5G module, an LTE module, an NB-IoT module, and an LTE-M module.

According to an embodiment of the disclosure, the home appliance 1000 may communicate with a server or other electrical device outside the home appliance 1000 and transmit and receive data, through the communication interface 1300.

The sensor unit 1400 may include a current sensor 1410 and a DC link voltage sensor 1420. The current sensor 1410 may be disposed at various locations in a circuit included in the home appliance 1000 to obtain current (mainly, AC current) information. For example, the current sensor 1410 may sense the current flowing in the second power converter 1150, a sensed value corresponding to a result of the sensing may be subtracted from a current command that is the output of the first controller 210 and the upper and lower limiter 220 in the controller 200, and a result of the subtraction may be input to the second controller 230. The DC link voltage sensor 1420 may sense the voltage across both ends of the DC link capacitor 60, and a result of the sensing may be used as an input of the first controller 210, which is a voltage controller.

The output interface 1500 is provided to output an audio signal or a video signal, and may include a display 1510, an audio output interface 1520, or other interface devices.

According to an embodiment of the disclosure, the home appliance 1000 may display information related with the home appliance 1000 via the display 1510. For example, power factor information of the home appliance 1000 or each harmonic component value (e.g., % or A (ampere) of each harmonic component relative to the input current) of the home appliance 1000 may be displayed on the display 1510, or occurrence or non-occurrence of regenerative braking may be displayed, or the charging rate or other energy parameters of the energy storage device may be displayed.

When the display 1510 forms a layer structure together with a touch pad to construct a touch screen, the display 1510 may be used as an input device as well as an output device. The display 1510 may include at least one selected from a liquid crystal display (LCD), a thin film transistor-liquid crystal display (TFT-LCD), a light-emitting diode (LED), an organic light-emitting diode (OLED), a flexible display, a 3D display, and an electrophoretic display. According to embodiments of the home appliance 1000, the home appliance 1000 may include at least two displays 1510.

The audio output interface 1520 may output audio data that is received from the communication interface 1300 or stored in the memory 1700. The audio output interface 1520 may output audio signals related to functions performed by the home appliance 1000. The audio output interface 1520 may include, for example, a speaker and a buzzer.

According to an embodiment of the disclosure, the output interface 1500 may output at least one of power factor information, harmonic component information, occurrence or non-occurrence of regenerative braking, or the energy storage device's charging rate of the home appliance 1000 through the display 1510. According to an embodiment of the disclosure, the output interface 1500 may display a current power level, an operation mode (e.g., a low noise mode, a normal mode, or a high power mode), a current power factor, and a charging rate (or other energy parameter) of the energy storage device.

The input interface 1600 is for receiving an input from a user. The input interface 1600 may include, but is not limited to, at least one of a key pad, a dome switch, a touch pad (e.g., a capacitive overlay type, a resistive overlay type, an infrared beam type, an integral strain gauge type, a surface acoustic wave type, a piezoelectric type, or the like), a jog wheel, or a jog switch.

The input interface 1600 may include a voice recognition module. For example, the home appliance 1000 may receive a speech signal, which is an analog signal, through a microphone, and convert the speech signal into computer-readable text by using an automatic speech recognition (ASR) model. The home appliance 1000 may also obtain a user's utterance intention by interpreting the converted text using a Natural Language Understanding (NLU) model. The ASR model or the NLU model may be an AI model. The AI model may be processed by an AI-only processor designed with a hardware structure specialized for processing the AI model. The AI model may be created through learning. Here, being created through learning means that a basic AI model is trained using a plurality of training data by a learning algorithm, such that a predefined operation rule or AI model set to perform desired characteristics (or a desired purpose) is created. The AI model may be composed of a plurality of neural network layers. Each of the plurality of neural network layers has a plurality of weight values, and performs a neural network operation through an operation between an operation result of a previous layer and the plurality of weight values.

Linguistic understanding is a technology that recognizes and applies/processes human language/character, and thus includes natural language processing, machine translation, a dialog system, question answering, and speech recognition/speech recognition/synthesis, and the like.

The memory 1700 may store a program for processing control of the processor 1200, and may also store input/output data (for example, the power factor information and harmonic component information of the home appliance 1000). The memory 1700 may store an AI model.

The memory 1700 may include at least one type of storage medium selected from among a flash memory type, a hard disk type, a multimedia card micro type, a card type memory (for example, a secure digital (SD) or extreme digital (XD) memory), a random-access memory (RAM), a static random-access memory (SRAM), a read-only memory (ROM), an electrically erasable programmable ROM (EEPROM), a programmable ROM (PROM), magnetic memory, a magnetic disk, and an optical disk. The home appliance 1000 may operate a web storage or cloud server which performs a storage function on the Internet.

The motor 1800 is a rotating body that may be driven by an AC voltage, and may be used for washing or drying, cleaning, an air conditioner operation, a cooler operation, and the like by rotation in the home appliance 1000, but embodiments of the disclosure are not limited thereto. The motor 1800 may return energy to the inverter 1130 and the DC link capacitor 60 due to the back electromotive force generated during deceleration.

The energy storage device 1900 is a device capable of storing excessive energy when the voltage of the DC link capacitor 60 becomes equal to or greater than the certain voltage. The energy storage device 1900 may include the super capacitor 65, or may include the battery 67. The battery 67 may be a lithium-ion battery or may be another battery capable of being charged and discharged. The energy storage device 1900 may supply energy back to the DC link capacitor 60 by the second power converter 1150, and may supply a DC voltage to the load 50 by the third power converter 1160.

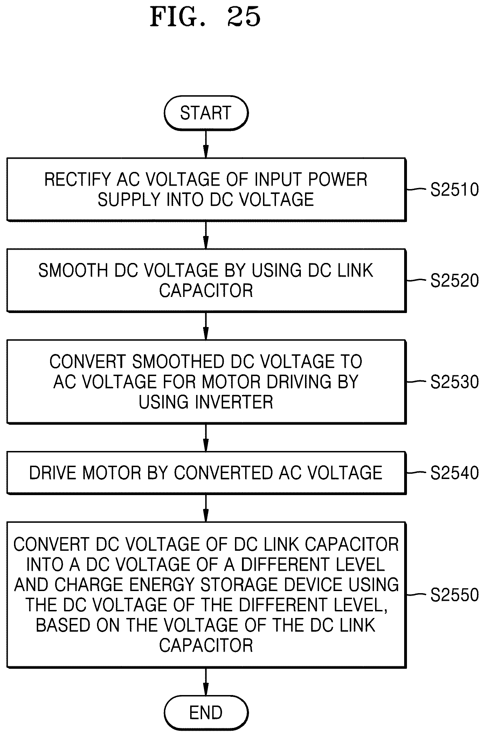

FIG. 25 is a flowchart of an energy control method due to regenerative braking in a home appliance, according to an embodiment of the disclosure.

The energy control method according to the flowchart of FIG. 25 involves control for transferring the energy of the DC link capacitor 60 to the energy storage device 1900, such as, for example, the super capacitor 65 or a battery, when regenerative braking occurs due to stoppage or deceleration of the motor 1800 of the home appliance 1000.

Referring to FIG. 25, in operation S2510, the rectifier 1120 of the home appliance 1000 rectifies an AC voltage of an input power supply. For example, the rectifier 1120 converts the AC voltage into a DC voltage and provides (outputs) the DC voltage.

In operation S2520, the DC voltage provided by the rectifier 1120 is a DC voltage including a ripple, and the DC link capacitor 60 may smooth the DC voltage.

In operation S2530, the inverter 1130 may convert the smoothed DC voltage provided by the DC link capacitor 60 to an AC voltage for driving the motor 1800. At this time, the processor 1200 may generate a gate signal and apply the gate signal to a switch of the inverter 1130.

In operation S2540, the energy control method may include driving the motor 1800 of the home appliance 1000 using the converted AC voltage.

In operation S2550, the energy control method may include converting the DC voltage of the DC link capacitor 60 into a DC voltage of a different level and charging the energy storage device 190 using the DC voltage of the different level, based on the voltage of the DC link capacitor 60 (e.g., as sensed by the DC link voltage sensor 1420) and a first certain voltage (e.g., a threshold voltage). For example, the processor 1200 of the home appliance 1000 may control the conversion of the DC voltage of the DC link capacitor 60 into the DC voltage of the different level and control the charging of the energy storage device 190, based on comparing the voltage of the DC link capacitor 60 (e.g., as sensed by the DC link voltage sensor 1420) and the first certain voltage.

In an example, in operation S2550, when the voltage of the DC link capacitor 60 increases due to the regenerative braking energy caused by deceleration of the motor 1800, and the processor 1200 of the home appliance 1000 may determine the voltage of the DC link capacitor 60 sensed by the DC link voltage sensor 1420 is equal to or greater than the first certain voltage. The processor 1200 of the home appliance 1000 may control the second insulation transformer 1152 in association with converting the DC voltage of the DC link capacitor 60 into a DC voltage of a different level and charging the energy storage device 1900 with the DC voltage of the different level. The first certain voltage may vary based on designs, and, for example, may be 314V. For example, the second power converter 1150 may convert (e.g., reduce) the voltage of the DC link capacitor 60 and output a DC voltage (e.g., 30V) by buck conversion, and the second power converter 1150 may charge the energy storage device 1900 with the DC voltage output by the second power converter 1150.

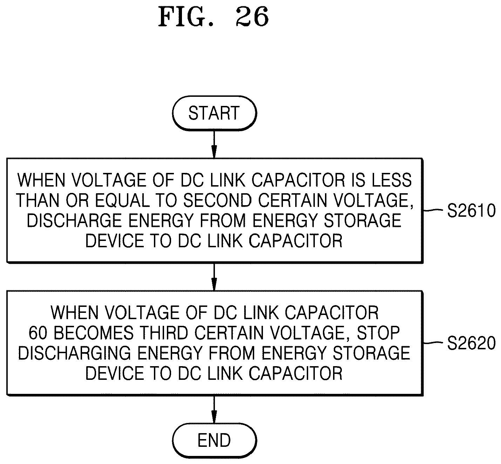

FIG. 26 is a flowchart of a discharging control method of an energy storage device in a home appliance, according to an embodiment of the disclosure.

In FIG. 26, contrary to the charging of the energy storage device 1900 conducted in FIG. 25, the discharging control method may omit regenerative braking by the motor 1800, and the discharging control method may include transmitting, by the energy storage device 1900, energy to the DC link capacitor 60.

The DC link voltage sensor 1420 may sense the voltage of the DC link capacitor 60.

In accordance with an embodiment of the discharging control method, based on comparing the voltage of the DC link capacitor 60 (e.g., as sensed by the DC link voltage sensor 1420) and a certain voltage (e.g., a second certain voltage described herein, a third certain voltage described herein), the processor 1200 of the home appliance 1000 may control discharging of energy between the energy storage device 1900 and the DC link capacitor 60.

In operation S2610, when the DC link voltage sensor 1420 senses the voltage of the DC link capacitor 60 is less than or equal to a second certain voltage, the processor 1200 of the home appliance 1000 may determine that energy is to be transferred to the DC link capacitor 60. For example, based on comparing the voltage of the DC link capacitor 60 (e.g., as sensed by the DC link voltage sensor 1420) and the second certain voltage, the processor 1200 of the home appliance 1000 may determine whether to transfer energy to the DC link capacitor 60. Accordingly, the processor 1200 of the home appliance 1000 may control the second power converter 1150 such that the second power converter 1150 discharges the energy storage device 1900, in which current flows from the energy storage device 1900 toward the DC link capacitor 60. At this time, in some aspects, the second power converter 1150 can perform boost conversion. For example, the second power converter 1150 may boost the 30V DC voltage of the energy storage device 1900 to a voltage of 311V, such that the voltage across both ends of the DC link capacitor 60 is equal to 311V.

In operation S2620, when the DC link voltage sensor 1420 senses the voltage of the DC link capacitor 60 becomes a third certain voltage, the processor 1200 of the home appliance 1000 may stop the energy charging from the energy storage device 1900 to the DC link capacitor 60. For example, based on comparing the voltage of the DC link capacitor 60 (e.g., as sensed by the DC link voltage sensor 1420) and the third certain voltage, the processor 1200 of the home appliance 1000 may determine whether to stop the transfer of energy to the DC link capacitor 60. In an example, the processor 1200 may control the second power converter 1150 such that the second power converter 1150 refrains from discharging the energy storage device 1900. In an example, the third certain voltage may be 311V, which is the voltage of the DC link capacitor 60 in a normal stable state.

In the descriptions of the methods and processes herein, the operations may be performed in a different order than the order shown and/or described, or the operations may be performed in different orders or at different times. Certain operations may also be left out of the method and processes, one or more operations may be repeated, or other operations may be added.

An embodiment of the disclosure supports one or more processes (methods) supportive of the features and embodiments described herein. Descriptions that an element "may be charged," "may be discharged," "may be controlled," and the like include processes (methods) and techniques supportive of energy control methods and controlling regenerative braking energy in accordance with example aspects described herein.

Not all of the components illustrated in the home appliance 1000 according to an embodiment of the disclosure are essential components. The home appliance 1000 may be implemented by more or less components than those illustrated in FIG. 24. Throughout this disclosure, an electric apparatus including the home appliance 1000 may be a home appliance sold independently or may be a device that constitutes some products of a home appliance.

A washing machine according to an embodiment of the disclosure, includes a case, a laundry inlet through which laundry is loadable, the laundry inlet being disposed in an upper portion or lateral surface of the case, a door attached to the laundry inlet, a fixed tank capable of storing water for washing the laundry, a rotating tank composed of a container within the fixed tank and capable of rotating, and a power conversion device for driving a motor 1800 that rotates the rotating tank. The power conversion device includes a first rectifier 1120 or 1120_1 configured to rectify an alternating current (AC) voltage of an input power supply 1001, a direct current (DC) link capacitor 60 configured to smooth the DC voltage rectified by the first rectifier 1120 or 1120_1, an inverter 1130 configured to convert the DC voltage smoothed by the DC link capacitor 60 into an AC voltage for driving the motor 1800, the motor 1800 driven by the AC voltage converted by the inverter 1130 to rotate the rotating tank, a first power converter 1140 connected to both ends of the DC link capacitor 60 or the input power supply 1001 to generate a DC voltage that is supplied to a load 50, the load 50 capable of being driven by the DC voltage generated by the first power converter, a second power converter 1150 connected to the both ends of the DC link capacitor 60, and configured to convert the DC voltage of the DC link capacitor 60, based on a voltage on the both ends of the DC link capacitor 60 becoming greater than or equal to a first certain voltage caused by deceleration of the motor 1800, and charging an energy storage device 1900 with the converted DC voltage, and a processor configured to control respective operations of the first power converter 1140 and the second power converter 1150.

**In** the washing machine according to an embodiment of the disclosure, when the first power converter is connected to the input power supply, the first power converter may include a second rectifier for converting the AC voltage of the input power supply to a DC voltage.

The washing machine according to an embodiment of the disclosure may further include a third power converter 1160 configured to convert the DC voltage of the energy storage device into the DC voltage that is supplied to the load, and the processor may control the third power converter 1160.

The washing machine according to an embodiment of the disclosure may further include a first diode between the first power converter and the load, and a second diode between the third power converter and the load. When the direct current voltage obtained by the third power converter is greater than the DC voltage generated by the first power converter by a certain voltage, the DC voltage obtained by the third power converter may be selected as a voltage supplied to the load by the second diode.

In the washing machine according to an embodiment of the disclosure, an input of the second power converter may be electrically insulated from an output of the second power converter.

In the washing machine according to an embodiment of the disclosure, an input of the third power converter may be electrically insulated from an output of the third power converter.

In the washing machine according to an embodiment of the disclosure, each of the second power converter and the third power converter may be a DC/DC converter configured to change a DC voltage into a DC voltage of a different level.

In the washing machine according to an embodiment of the disclosure, the second power converter may be configured to convert the DC voltage of the DC link capacitor, based on a voltage on the both ends of the DC link capacitor becoming equal to or greater than a first predetermined voltage due to regenerative braking caused by deceleration of the motor 1800, to charge an energy storage device 1900 and the second power converter may be a bidirectional buck-boost converter configured to convert a DC voltage into a DC voltage of a different level in both directions.

In the washing machine according to an embodiment of the disclosure, the processor may control the bidirectional buck-boost converter to transmit power charged in the energy storage device to the DC link capacitor, based on a determination that regenerative braking due to deceleration of the motor does not occur or that power for driving the motor is required.

In the washing machine according to an embodiment of the disclosure, the processor may control the bidirectional buck-boost converter to transmit power charged in the energy storage device to the DC link capacitor, based on power required for driving the motor again.

In the washing machine according to an embodiment of the disclosure, the processor may control the bidirectional buck-boost converter to transmit power charged in the energy storage device to the DC link capacitor, based on the voltage of the DC link capacitor being less than or equal to a second certain voltage.

In the washing machine according to an embodiment of the disclosure, the processor may control the bidirectional buck-boost converter to stop energy charging from the energy storage device to the DC link capacitor, based on the voltage of the DC link capacitor becoming a third certain voltage.

The washing machine according to an embodiment of the disclosure may further include a communication interface, and a user interface including an input interface and an output interface, and the load may include at least one of the processor, the communication interface, or the user interface.

In the washing machine according to an embodiment of the disclosure, the communication interface may include a Wi-Fi communication interface, and the processor may control the power generated by the regenerative braking to be used to drive the Wi-Fi communication interface to achieve Wi-Fi communication.

In the washing machine according to an embodiment of the disclosure, the processor may control the DC voltage of the DC link capacitor to be converted and charged in the energy storage device, and then control the voltage on both ends of the DC link capacitor to maintain a certain voltage command.

In the washing machine according to an embodiment of the disclosure, while the processor is controlling the voltage on both ends of the DC link capacitor to maintain the certain voltage command, a current value charged in the energy storage device is constant.

In the washing machine according to an embodiment of the disclosure, the certain voltage command may be less than or equal to the certain voltage.

In a method of controlling a washing machine, according to an embodiment of the disclosure, the washing machine includes a case, a laundry inlet through which laundry is loadable, the laundry inlet being disposed in an upper portion or lateral surface of the case, a door attached to the laundry inlet, a fixed tank capable of storing water for washing the laundry, a rotating tank composed of a container within the fixed tank and capable of rotating, and a power conversion device for driving a motor that rotates the rotating tank. The method may include rectifying an alternating current (AC) voltage of an input power supply to a direct current (DC) voltage, smoothing the DC voltage by using a DC link capacitor, converting the smoothed DC voltage into an AC voltage for driving a motor, rotating the rotating tank by driving the motor by using the converted AC voltage, and converting the DC voltage of the DC link capacitor and charging an energy storage device with the converted DC voltage, when a voltage of the DC link capacitor becomes equal to or greater than a first certain voltage caused by deceleration of the motor.

The method of controlling the washing machine according to an embodiment of the disclosure, may further include converting the DC voltage of the DC link capacitor and charging an energy storage device, when a voltage of the DC link capacitor becomes equal to or greater than a first certain voltage due to regerative braking caused by deceleration of the motor.

The method of controlling the washing machine, according to an embodiment of the disclosure, may further include discharging energy from the energy storage device to the DC link capacitor when the voltage of the DC link capacitor becomes less than or equal to a second certain voltage.

The method of controlling the washing machine, according to an embodiment of the disclosure, may further include stopping discharging the energy from the energy storage device to the DC link capacitor when the voltage of the DC link capacitor becomes a third certain voltage.

In a computer-readable medium storing instructions executed by a computer capable of executing a method, performed by a washing machine, according to an embodiment of the disclosure, the washing machine includes a case, a laundry inlet through which laundry is loadable, the laundry inlet being disposed in an upper portion or lateral surface of the case, a door attached to the laundry inlet, a fixed tank capable of storing water for washing the laundry, a rotating tank composed of a container within the fixed tank and capable of rotating, and a power conversion device for driving a motor that rotates the rotating tank. The method, performed by the washing machine, according to the instructions executed by a computer, may include rectifying an AC voltage of an input power supply to a DC voltage, smoothing the DC voltage by using a DC link capacitor, converting the smoothed DC voltage into an AC voltage for driving a motor, rotating the rotating tank by driving the motor by using the converted AC voltage, and converting the DC voltage of the DC link capacitor and charging an energy storage device with the converted DC voltage, when a voltage of the DC link capacitor becomes equal to or greater than a first certain voltage caused by deceleration of the motor.

An embodiment of the disclosure may also be implemented in the form of a recording medium including instructions executable by a computer, such as, for example, a program module executed by a computer. Computer-readable media may be any available media accessible by a computer and includes both volatile and nonvolatile media and removable and non-removable media. Further, the computer readable medium may include all computer storage and communication media. The computer storage medium includes all volatile/non-volatile and removable/non-removable media embodied by a certain method or technology for storing information such as, for example, computer readable instruction code, a data structure, a program module or other data. The communication medium typically includes the computer readable instruction code, the data structure, the program module, or other data of a modulated data signal, or other transmission mechanism, and includes any information transmission medium. An embodiment of the disclosure may be implemented as a computer program or a computer program product including instructions executable by a computer.

The machine-readable storage medium may be provided as a non-transitory storage medium. The 'non-transitory storage medium' is a tangible device and means that the 'non-transitory storage medium' does not contain a signal (e.g., electromagnetic waves). The term 'non-transitory storage medium' does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as, for example, a memory of a manufacturer's server, a server of an application store, or a relay server, or may be temporarily generated.

## Claims

1.   A washing machine comprising:

a case;
a laundry inlet through which laundry is loaded, the laundry inlet being disposed in an upper portion or a lateral surface of the case;
a door attached to the laundry inlet;
a fixed tank configured to store water for washing the laundry;
a rotating tank within the fixed tank and capable of rotating, the rotating tank including a container; and
a power conversion device configured to drive a motor that rotates the rotating tank, wherein the power conversion device comprises:

a first rectifier configured to rectify an alternating current (AC) voltage of an input power supply and provide a first DC voltage based on rectifying the AC voltage;
a direct current (DC) link capacitor configured to smooth the first DC voltage provided by the first rectifier and output a smoothed DC voltage;
an inverter configured to convert the smoothed DC voltage output by the DC link capacitor into an AC voltage for driving the motor;
the motor, wherein the motor is driven by the AC voltage provided by the inverter and is configured to rotate the rotating tank based on the AC voltage;
a first power converter connected to both ends of the DC link capacitor or both ends of the input power supply and configured to generate and supply a second DC voltage to a load;
the load, wherein the load is capable of being driven by the second DC voltage supplied by the first power converter;
a second power converter connected to the both ends of the DC link capacitor and configured to convert the smoothed DC voltage provided by the DC link capacitor into a third DC voltage and charge an energy storage device with the third DC voltage, based on a voltage across the both ends of the DC link capacitor becoming greater than or equal to than a first certain voltage, wherein an increase of the voltage at the both ends of the DC link capacitor is caused by deceleration of the motor; and
a processor configured to control respective operations of the first power converter and the second power converter.

2. The washing machine of claim 1, wherein when the first power converter is connected to the both ends of the input power supply, the power conversion device further comprises a second rectifier configured to rectify the AC voltage of the input power supply and provide a fourth DC voltage to the first power converter based on rectifying the AC voltage.

3. The washing machine of any one of claims 1 to 2, wherein the power conversion device further comprises a third power converter configured to generate and supply a fifth DC voltage to the load, wherein the third power converter is configured to convert stored DC voltage provided by the energy storage device into the fifth DC voltage, wherein the processor is configured to control the third power converter.

4. The washing machine of claim 3, further comprising:

   a first diode between the first power converter and the load; and
   a second diode between the third power converter and the load,
   wherein, in response to the fifth DC voltage generated by the third power converter being greater than the second DC voltage generated by the first power converter by a certain voltage, the fifth DC voltage generated by the third power converter to the load is selected as a voltage supplied to the load .

5. The washing machine of any one of claims 3 to 4, wherein an input of the second power converter is electrically insulated from an output of the second power converter and an input of the third power converter is electrically insulated from an output of the third power converter.

6. The washing machine of any one of claims 3 to 5, wherein each of the second power converter and the third power converter is a DC/DC converter configured to convert a DC voltage into a DC voltage of a different level.

7. The washing machine of any one of claims 1 to 6, wherein the second power converter is configured to convert the DC voltage of the DC link capacitor, based on the voltage on the both ends of the DC link capacitor becoming equal to or greater than a first predetermined voltage due to regenerative braking caused by the deceleration of the motor, to charge the energy storage device and the second power converter is a bidirectional buck-boost converter configured to convert a DC voltage into a DC voltage of a different level in both directions.

8. The washing machine of any one of claims 1 to 7, wherein the processor is further configured to control the second power converter in association with transmitting power stored in the energy storage device to the DC link capacitor, based on a determination by the processor that regenerative braking due to deceleration of the motor is not occurring or that power for driving the motor is to be provided to the motor.

9. The washing machine of any one of claims 1 to 7, wherein the processor is further configured to control the second power converter in association with transmitting power stored in the energy storage device to the DC link capacitor, based on a target power associated with driving the motor again.

10. The washing machine of any one of claims 1 to 7, wherein the processor is further configured to control the second power converter in association with transmitting power stored in the energy storage device to the DC link capacitor, based on the voltage of the DC link capacitor being less than or equal to a second certain voltage.

11. The washing machine of any one of claims 1 to 10, wherein the processor is further configured to control the second power converter in association with refraining from transmitting the power stored in the energy storage device to the DC link capacitor, based on the voltage of the DC link capacitor being equal to a third certain voltage.

12. The washing machine of any one of claims 1 to 11, further comprising:

    a communication interface; and
    a user interface comprising an input interface and an output interface, wherein the load includes at least one of the processor, the communication interface, and the user interface;
    wherein the communication interface comprises a Wi-Fi communication interface, and
    wherein the processor is further configured to control power generated by the regenerative braking in association with driving the Wi-Fi communication interface and achieving Wi-Fi communication.

13. The washing machine of any one of claims 1 to 12, wherein the processor is further configured to:

control conversion of the smoothed DC voltage provided by the DC link capacitor into the third DC voltage in association with charging the energy storage device; and

control the voltage across the both ends of the DC link capacitor such that the voltage is equal to or less than a target voltage.

14. The washing machine of claim 13, wherein, while the processor is controlling the voltage across the both ends of the DC link capacitor such that the voltage is equal to or less than the target voltage, a magnitude of a current associated with charging the energy storage device is constant.

15. A method of controlling a washing machine, the washing machine comprising a case, a laundry inlet through which laundry is loaded, the laundry inlet being disposed in an upper portion or lateral surface of the case, a door attached to the laundry inlet, a fixed tank configured to store water for washing the laundry, a rotating tank within the fixed tank and capable of rotating, the rotating tank including a container, and a power conversion device configured to drive a motor that rotates the rotating tank, the method comprising:

rectifying a first alternating current (AC) voltage of an input power supply and providing a first direct current (DC) voltage based on rectifying the first AC voltage;

smoothing the first DC voltage by using a DC link capacitor;

converting the smoothed DC voltage into a second AC voltage for driving a motor;

rotating the rotating tank by driving the motor by using the second AC voltage; and

converting the smoothed DC voltage of the DC link capacitor to a second DC voltage and charging an energy storage device with the second DC voltage, when the smoothed DC voltage of the DC link capacitor becomes greater than or equal to a first certain voltage, wherein the smoothed DC voltage of the DC link capacitor is caused by deceleration of the motor.

# FIG. 1

FIG. 2A

# FIG. 2B

# FIG. 2C

# FIG. 2D

# FIG. 3A

# FIG. 3B

# FIG. 3C

SWITCH SWITCH
on off

$V_L$

$V_{in} - V_{out}$

$DT_s$    $T_s$

$-V_{out}$

$i_L$

$\Delta i_L$

HAVE SAME SIZES ACCORDING TO
FLUX BALANCE CONDITION OF INDUCTOR

# FIG. 4A

# FIG. 4B

# FIG. 4C

HAVE SAME SIZES ACCORDING TO
FLUX BALANCE CONDITION OF INDUCTOR

**FIG. 5**

# FIG. 6A

# FIG. 6B

FIRST POWER
CONVERTER

# FIG. 7

# FIG. 8

EP 4 722 438 A1

## FIG. 9

49

# FIG. 10

- 1001
- 1120
- 60 C
- 1130 INVERTER
- 1800 MOTOR
- FIRST POWER CONVERTER
- 1140
- 1142 FIRST INSULATION TRANSFORMER
- 1144 FIRST SWITCH
- 81 D1
- 82 D2
- 50 LOAD
- 1154 SECOND SWITCH
- 1156 SECOND INDUCTOR
- 65 Cs
- 1162 THIRD INSULATION TRANSFORMER
- 1164 THIRD SWITCH
- SECOND POWER CONVERTER 1150
- THIRD POWER CONVERTER 1160

# FIG. 11

# FIG. 12

# FIG. 13

# FIG. 14

# FIG. 15

# FIG. 16

SECOND POWER CONVERTER ⟋1150

1156
SECOND INDUCTOR

1154
SECOND SWITCH

buck

1130

1420
DC LINK
VOLTAGE SENSOR

60
C

INVERTER

65
Cs

1410
CURRENT SENSOR

boost
FOURTH SWITCH
1158

200

− 220 210 +

FIRST
CONTROLLER

Vref

230 240

SECOND
CONTROLLER

PWM
GENERATOR

buck

boost

CONTROLLER

EP 4 722 438 A1

# FIG. 17

EP 4 722 438 A1

# FIG. 18

# FIG. 19

SECOND POWER CONVERTER — 1150

1156 — SECOND INDUCTOR  
1154 — SECOND SWITCH — buck  
1130 — INVERTER  
65 — Cs  
60 — C  
1410 — CURRENT SENSOR  
1158 — FOURTH SWITCH — boost  
1420 — DC LINK VOLTAGE SENSOR  

200 — CONTROLLER  
220  
210 — FIRST CONTROLLER  
$V_{ref}$  
230 — SECOND CONTROLLER  
240 — PWM GENERATOR — buck / boost

EP 4 722 438 A1

# FIG. 20

THIRD POWER CONVERTER 1160

SECOND POWER CONVERTER 1150

1162 THIRD INSULATION TRANSFORMER

1156 SECOND INDUCTOR

1154 SECOND SWITCH

50 LOAD

1164 THIRD SWITCH

65 Cs

60 C

1130 INVERTER

FB

FOURTH SWITCH 1158

1430 LOAD VOLTAGE SENSOR

CONTROLLER 300

$V_{ref}$

310 제3 CONTROLLER

320

340 PWM GENERATOR

FB

EP 4 722 438 A1

# FIG. 21

# FIG. 22

STOPPAGE DURING DEWATERING

VOLTAGE OF v, i
DC LINK CAPACITOR
VOLTAGE OF ENERGY
STORAGE DEVICE

CURRENT OF ENERGY
STORAGE DEVICE

t

STOPPAGE PERIOD
(22sec)

EP 4 722 438 A1

# FIG. 23

1. GENERATION OF OVERVOLTAGE

VOLTAGE OF DC LINK CAPACITOR

VOLTAGE OF ENERGY STORAGE DEVICE

2. CHARGING STOPPAGE/MOTOR SHORT-CIRCUIT BRAKING

3. AFTER A DC LINK CAPACITOR ENTERS NORMAL VOLTAGE, CHARGING OF ENERGY STORAGE DEVICE RESTARTS

CURRENT OF ENERGY STORAGE DEVICE

EP 4 722 438 A1

# FIG. 24

1000

| DRIVER | 1100 | | PROCESSOR | 1200 | | COMMUNICATION INTERFACE | 1300 |

1100

**DRIVER**

1110 — EMI FILTER

1120 — RECTIFIER

1130 — INVERTER

1140 — FIRST POWER CONVERTER

1150 — SECOND CONVERTER

1160 — THIRD CONVERTER

1200

**PROCESSOR**

1300

**COMMUNICATION INTERFACE**

1310 — SHORT-RANGE COMMUNICATION INTERFACE

| Bluetooth | BLE |
| NFC/RFID | WLAN |
| ZIGBEE | Ant+ |
| Wi-Fi Direct | UWB |

1320 — LONG-RANGE COMMUNICATION INTERFACE

1900

**ENERGY STORAGE DEVICE**

1400

**SENSOR UNIT**

1410 — CURRENT SENSOR

1420 — DC LINK VOLTAGE SENSOR

1430 — LOAD VOLTAGE SENSOR

1500

**OUTPUT INTERFACE**

1510 — DISPLAY

1520 — AUDIO OUTPUT INTERFACE

1600

**INPUT INTERFACE**

1800

**MOTOR**

1700

**MEMORY**

# FIG. 25

START

RECTIFY AC VOLTAGE OF INPUT POWER SUPPLY INTO DC VOLTAGE — S2510

SMOOTH DC VOLTAGE BY USING DC LINK CAPACITOR — S2520

CONVERT SMOOTHED DC VOLTAGE TO AC VOLTAGE FOR MOTOR DRIVING BY USING INVERTER — S2530

DRIVE MOTOR BY CONVERTED AC VOLTAGE — S2540

CONVERT DC VOLTAGE OF DC LINK CAPACITOR INTO A DC VOLTAGE OF A DIFFERENT LEVEL AND CHARGE ENERGY STORAGE DEVICE USING THE DC VOLTAGE OF THE DIFFERENT LEVEL, BASED ON THE VOLTAGE OF THE DC LINK CAPACITOR — S2550

END

# FIG. 26

START

WHEN VOLTAGE OF DC LINK CAPACITOR IS LESS THAN OR EQUAL TO SECOND CERTAIN VOLTAGE, DISCHARGE ENERGY FROM ENERGY STORAGE DEVICE TO DC LINK CAPACITOR ⎯ S2610

WHEN VOLTAGE OF DC LINK CAPACITOR 60 BECOMES THIRD CERTAIN VOLTAGE, STOP DISCHARGING ENERGY FROM ENERGY STORAGE DEVICE TO DC LINK CAPACITOR ⎯ S2620

END

## INTERNATIONAL SEARCH REPORT

| International application No. |
|---|
| **PCT/KR2024/096125** |

| A. | CLASSIFICATION OF SUBJECT MATTER |
|---|---|

**D06F 37/30**(2006.01)i; **H02P 27/06**(2006.01)i; **H02P 3/14**(2006.01)i; **H02M 1/00**(2007.01)i; **H02M 3/335**(2006.01)i; **D06F 34/05**(2020.01)i; **D06F 34/28**(2020.01)i; **D06F 103/46**(2020.01)i; **D06F 105/46**(2020.01)i

According to International Patent Classification (IPC) or to both national classification and IPC

| B. | FIELDS SEARCHED |
|---|---|

Minimum documentation searched (classification system followed by classification symbols)

D06F 37/30(2006.01); D06F 33/02(2006.01); D06F 58/30(2020.01); H02J 7/14(2006.01); H02P 3/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉장고(laundry machine), 모터(motor), 변환(converting), 인버터 (inverter), 및 캐패시터(capacitor)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2019-0124603 A (LG ELECTRONICS INC.) 05 November 2019 (2019-11-05)<br>See paragraphs [0004]-[0013] and [0039]-[0115] and figures 1-9. | 1-15 |
| Y | KR 10-1449513 B1 (AMOTECH CO., LTD.) 14 October 2014 (2014-10-14)<br>See paragraphs [0067]-[0098] and figures 3-9. | 1-15 |
| Y | JP 2004-364457 A (FANUC LTD.) 24 December 2004 (2004-12-24)<br>See paragraphs [0009]-[0014] and [0019] and figures 1-2. | 11,13,14 |
| A | KR 10-2021-0006769 A (LG ELECTRONICS INC.) 19 January 2021 (2021-01-19)<br>See paragraphs [0035]-[0236] and figures 1-8. | 1-15 |
| A | JP 2014-061267 A (SHARP CORP.) 10 April 2014 (2014-04-10)<br>See paragraphs [0027]-[0234] and figures 1-16. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 December 2024** | **13 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/096125**

| Patent document cited in search report | | | Publication date (day/month/year) | Patent family member(s) | | | Publication date (day/month/year) |
|---|---|---|---|---|---|---|---|
| KR | 10-2019-0124603 | A | 05 November 2019 | KR | 10-2161630 | B1 | 05 October 2020 |
| KR | 10-1449513 | B1 | 14 October 2014 | | None | | |
| JP | 2004-364457 | A | 24 December 2004 | CN | 1300932 | C | 14 February 2007 |
| | | | | CN | 1574604 | A | 02 February 2005 |
| | | | | EP | 1484832 | A2 | 08 December 2004 |
| | | | | EP | 1484832 | A3 | 27 September 2006 |
| | | | | EP | 1484832 | B1 | 06 October 2010 |
| | | | | JP | 3722810 | B2 | 30 November 2005 |
| | | | | US | 2004-0245952 | A1 | 09 December 2004 |
| | | | | US | 7227323 | B2 | 05 June 2007 |
| KR | 10-2021-0006769 | A | 19 January 2021 | KR | 10-2674588 | B1 | 13 June 2024 |
| JP | 2014-061267 | A | 10 April 2014 | JP | 6184236 | B2 | 23 August 2017 |

Form PCT/ISA/210 (patent family annex) (July 2022)